(19) **Europäisches Patentamt / European Patent Office / Office européen des brevets**

(11) **EP 3 173 904 A1**

(12) # EUROPEAN PATENT APPLICATION
published in accordance with Art. 153(4) EPC

(43) Date of publication:
**31.05.2017 Bulletin 2017/22**

(21) Application number: **14898014.7**

(22) Date of filing: **23.07.2014**

(51) Int Cl.:
*G06F 3/01* (2006.01)    *G06F 3/0488* (2013.01)

(86) International application number:
**PCT/JP2014/069438**

(87) International publication number:
**WO 2016/013068 (28.01.2016 Gazette 2016/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Fujitsu Ltd.**
**Kawasaki-shi, Kanagawa 211-8588 (JP)**

(72) Inventors:
• **ENDO, Yasuhiro**
**Kawasaki-shi**
**Kanagawa 211-8588 (JP)**
• **CHUJO, Kaoru**
**Kawasaki-shi**
**Kanagawa 211-8588 (JP)**

• **TANINAKA, Kiyoshi**
**Kawasaki-shi**
**Kanagawa 211-8588 (JP)**
• **MIYAMOTO, Akinori**
**Kawasaki-shi**
**Kanagawa 211-8588 (JP)**
• **KAMATA, Yuichi**
**Kawasaki-shi**
**Kanagawa 211-8588 (JP)**

(74) Representative: **Ward, Gregory Peter**
**Haseltine Lake LLP**
**Lincoln House**
**300 High Holborn**
**London WC1V 7JH (GB)**

(54) **TACTILE SENSATION DATA PROCESSING DEVICE, TACTILE SENSATION PROVIDING SYSTEM, AND TACTILE SENSATION DATA PROCESSING METHOD**

(57)     Provided is a tactile sensation data processing apparatus that can provide fine tactile sensations. A tactile sensation data processing apparatus for transmitting or receiving data between a first portable electronic terminal and a second portable electronic terminal via a network includes a data receiving part that receives first data relating to a target tangible object from the first portable electronic terminal; and a data transmitting part that transmits, to the second portable electronic terminal, tactile sensation data that represents tactile sensations of the target tangible object corresponding to the first data when the data receiving part receives the first data from the first portable electronic terminal, wherein the tactile sensation data is data that associates an image of the target tangible object with positions in the image and amplitudes corresponding to the tactile sensations of the target tangible object at the respective positions, and wherein the tactile sensation data is data that is used when adjusting an amplitude of a driving signal that drives a vibrating element that generates a natural vibration in an ultrasound frequency band in a manipulation input surface where a manipulation input is performed on a touch panel of the second portable electronic terminal or a touch panel of a tactile sensation providing apparatus connected to the second portable electronic terminal, based on an amplitude associated, inside the tactile sensation data, with a position in the image corresponding to a position of the manipulation input performed on the touch panel.

FIG.11

EP 3 173 904 A1

Printed by Jouve, 75001 PARIS (FR)

## Description

TECHNICAL FIELD

The present invention relates to a tactile sensation data processing apparatus, a tactile sensation providing system, and a tactile sensation data processing method.

BACKGROUND ART

Conventionally, there has been a tactile sensation producing apparatus that includes a display means, a contact detecting means that detects a contact state of a user's manipulation region on the display means, and a tactile vibration generating means that generates tactile vibration that gives a predetermined tactile sensation to the user's manipulation region contacting the display means (for example, see Patent Document 1).

The tactile sensation producing apparatus further includes a vibration waveform data generating means that generates waveform data for generating the tactile vibration based on a detected result of the contact detecting means. Also, the tactile sensation producing apparatus further includes an ultrasound modulating means that performs a modulating process on the waveform data, generated by the vibration waveform data generating means, by utilizing ultrasound as a carrier wave and outputs an ultrasound modulation signal generated by the modulating process to the tactile vibration generating means as a signal for generating the tactile vibration.

Also, the ultrasound modulating means performs either a frequency modulation or a phase modulation. Also, the ultrasound modulating means further performs an amplitude modulation.

[Related-Art Documents]

[Patent Documents]

[Patent Document 1] Japanese Laid-open Patent Publication No. 2010-231609

SUMMARY OF THE INVENTION

PROBLEM TO BE SOLVED BY THE INVENTION

However, an ultrasound frequency used in the conventional tactile sensation producing apparatus may be any frequency as long as the frequency is higher than that of an audio frequency (about 20 kHz). No specific setting is made for the ultrasound frequency. Accordingly, the tactile sensation producing apparatus may not provide a fine tactile sensation.

Thus, an object is to provide a tactile sensation data processing apparatus, a tactile sensation providing system, and a tactile sensation data processing method that can provide fine tactile sensations.

MEANS FOR SOLVING THE PROBLEM

A tactile sensation data processing according to an embodiment of the present invention is a tactile sensation data processing apparatus for transmitting or receiving data between a first portable electronic terminal and a second portable electronic terminal via a network including a data receiving part that receives first data relating to a target tangible object from the first portable electronic terminal; and a data transmitting part that transmits, to the second portable electronic terminal, tactile sensation data that represents tactile sensations of the target tangible object corresponding to the first data when the data receiving part receives the first data from the first portable electronic terminal, wherein the tactile sensation data is data that associates an image of the target tangible object with positions in the image and amplitudes corresponding to the tactile sensations of the target tangible object at the respective positions, and wherein the tactile sensation data is data that is used when adjusting an amplitude of a driving signal that drives a vibrating element that generates a natural vibration in an ultrasound frequency band in a manipulation input surface where a manipulation input is performed on a touch panel of the second portable electronic terminal or a touch panel of a tactile sensation providing apparatus connected to the second portable electronic terminal, based on an amplitude associated, inside the tactile sensation data, with a position in the image corresponding to a position of the manipulation input performed on the touch panel.

EFFECT OF THE INVENTION

It becomes possible to provide a tactile sensation data processing apparatus, a tactile sensation providing system, and a tactile sensation data processing method that can provide fine tactile sensations.

BRIEF DESCRIPTION OF DRAWINGS

FIG. 1 is a diagram illustrating an example of a mode of using a smartphone terminal 100 according to an embodiment;
FIG. 2 is a plan view illustrating the smartphone terminal 100 of the embodiment;
FIG. 3 is a diagram illustrating a cross-sectional view of the smartphone terminal 100 taken along a line A-A of FIG. 2;
FIG. 4 is a diagram illustrating crests and troughs of a standing wave formed in parallel with a short side of a top panel 120 included in standing waves generated in the top panel 120 by a natural vibration in an ultrasound frequency band;

FIG. 5 is a diagram illustrating cases where a kinetic friction force applied to a fingertip performing a manipulation input varies when the natural vibration in the ultrasound frequency band is generated in the top panel 120 of the smartphone terminal 100;

FIG. 6 is a diagram illustrating a configuration relating to a communication function of the smartphone terminal 100 of the embodiment;

FIG. 7 is a diagram illustrating a configuration of the smartphone terminal 100 of the embodiment;

FIG. 8 is a diagram illustrating data stored in a memory 250;

FIG. 9 is a diagram illustrating driving patterns of a vibrating element 140 in a case where a user performs the manipulation input on the smartphone terminal 100 of the embodiment;

FIG. 10 is a diagram illustrating a flowchart illustrating processing executed by a drive controlling part 240 of the smartphone terminal 100 of the embodiment;

FIG. 11 is a diagram illustrating procedures until tactile sensation data transmitted by a user A of the smartphone terminal 100 of the embodiment is received by another user B;

FIG. 12 is a diagram illustrating a situation in which the user A generates the tactile sensation data 900 using the smartphone terminal 101;

FIG. 13 is a diagram describing procedures of when tactile sensation data is created in a server 700 based on image data transmitted to the server 700 from the smartphone terminal 101 and the tactile sensation data is transmitted to the smartphone terminals 101 and 102;

FIG. 14 is a diagram illustrating procedures illustrated in FIG. 13 more specifically;

FIG. 15 is a diagram illustrating a situation in which the user A uses the smartphone terminal 101 to transmit the tactile sensation data 900 to the smartphone terminal 102 of the user B by near filed wireless communication;

FIG. 16 is a diagram illustrating a smartphone terminal 100A according to a first variation example of the embodiment;

FIG. 17 is a diagram illustrating a smartphone terminal 100B according to a second variation example of the embodiment;

FIG. 18 is a diagram illustrating a smartphone terminal 100C according to a third variation example of the embodiment;

FIG. 19 is a plan view illustrating an operating state of a smartphone terminal 100D according to a fourth variation example of the embodiment;

FIG. 20 is a diagram illustrating a state in which a tactile sensation providing apparatus 300A is connected to the smartphone terminal 102 via a short distance wireless communication apparatus 800;

FIG. 21 is a plan view illustrating an operating state of a tactile sensation providing apparatus 300B;

FIG. 22 is a plan view illustrating the tactile sensation providing apparatus 300B; and

FIG. 23 is a diagram illustrating a cross-sectional view of the tactile sensation providing apparatus 300B taken along a line A-A of FIG. 22.

MODE FOR CARRYING OUT THE INVENTION

In the following, embodiments to which a tactile sensation data processing apparatus, a portable electronic terminal, a tactile sensation providing system, and a tactile sensation data processing method of the present invention are applied will be described.

<Embodiment>

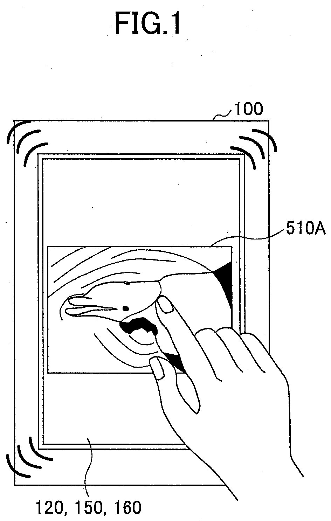

FIG. 1 is a diagram illustrating an example of a mode of using a smartphone terminal 100 according to an embodiment.

The smartphone terminal 100 includes a top panel 120, a touch panel 150, and a display panel 160. An image 510A of a dolphin is displayed on the display panel 160.

It is not easy to directly touch an actual dolphin. However, when the top panel 120, located on a front face of the touch panel 150 of the smartphone terminal 100, is touched to trace the image 510A displayed on the display panel 160, the smartphone terminal 100 vibrates to provide tactile sensations as if a user were touching the surface of the dolphin with the fingertip. The dolphin is an example of a target tangible object.

In this way, when the user touches the touch panel 120, the smartphone terminal 100 of the embodiment provides simulated tactile sensations as if the user were touching the actual object even when the user does not touch the actual object.

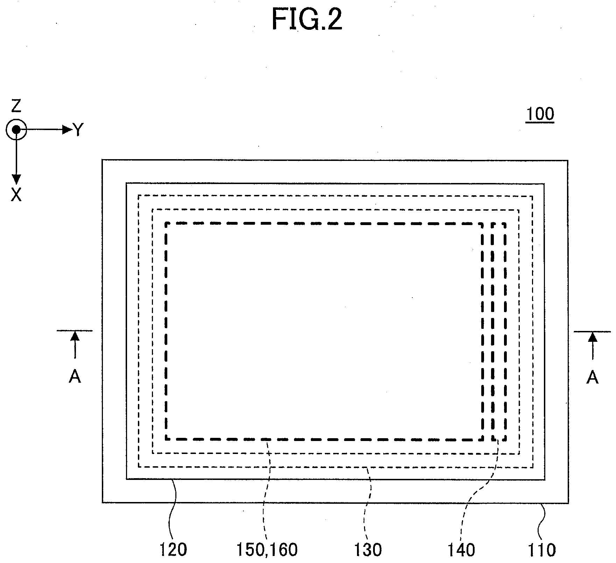

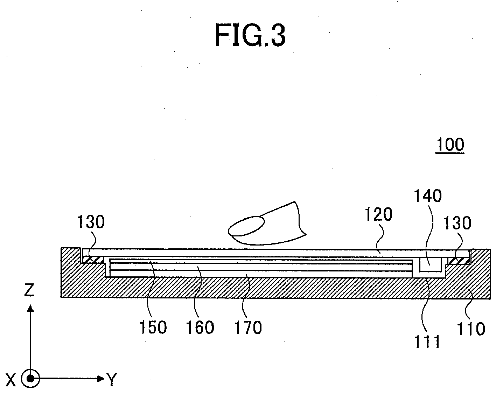

FIG. 2 is a plan view illustrating the smartphone terminal 100 of the embodiment. FIG. 3 is a diagram illustrating a cross-sectional view of the smartphone terminal 100 taken along a line A-A of FIG. 2. It should be noted that a XYZ coordinate system that is an orthogonal coordinate system is defined as illustrated in FIGS. 2 and 3.

The smartphone terminal 100 includes a housing 110, the top panel 120, a double-faced adhesive tape 130, a vibrating element 140, the touch panel 150, the display panel 160, and a substrate 170.

The housing 110 is made of a plastic, for example. As illustrated in FIG. 3, the substrate 170, the display panel 160 and the touch panel 150 are disposed in a concave portion 111 of the housing 110, and the top panel 120 is bonded on the housing 110 by the double-faced adhesive tape 130.

The top panel 120 is a flat plate member having a rectangular shape in plan view and is made of transparent glass or a reinforced plastic such as polycarbonate. A surface of the top panel 120 (a positive side surface in Z axis direction) is one example of a manipulation input surface on which the user of the smartphone terminal 100 performs a manipulation input.

The vibrating element 140 is bonded on a negative side surface of the top panel 120 in Z axis direction, and four sides in plan view of the top panel 120 are bonded on the housing 110 by the double-faced adhesive tape 130. It should be noted that the double-faced adhesive tape 130 is not necessarily a rectangular-ring-shaped member in plan view as illustrated in FIG. 3, as long as the double-faced adhesive tape 130 can bond four sides of the top panel 120 to the housing 110.

The touch panel 150 is disposed on the negative side in Z axis direction of the top panel 120. The top panel 120 is provided in order to protect the surface of the touch panel 150. It should be noted that another panel, protection film or the like may be provided on the surface of the top panel 120.

In a state where the vibrating element 140 is bonded on the negative side surface of the top panel 120 in Z axis direction, the top panel 120 vibrates if the vibrating element 140 is driven. In the embodiment, a standing wave is generated in the top panel 120 by causing the top panel 120 to vibrate at a natural resonance frequency of the top panel 120. However, because the vibrating element 140 is bonded on the top panel 120, it is preferable to determine the natural vibration frequency in consideration of a weight of the vibrating element 140 of the like, in a practical manner.

The vibrating element 140 is bonded on the negative side surface of the top panel 120 in Z axis direction at a location along the short side extending in X axis direction at a positive side in Y axis direction. The vibrating element 140 may be any element as long as it can generate vibration in an ultrasound frequency band. A piezoelectric element such as a piezo element may be used as the vibrating element 140, for example.

The vibrating element 140 is driven in accordance with a driving signal output from a drive controlling part which will be described later. A frequency and an amplitude (intensity) of the vibration generated in accordance with the vibrating element 140 are set by the driving signal. On/off of the vibrating element 140 is controlled in accordance with the driving signal.

It should be noted that the ultrasound frequency band is a frequency band which is higher than or equal to about 20 kHz, for example. According to the smartphone terminal 100 of the embodiment, the frequency at which the vibrating element 140 vibrates is equal to a number of vibrations per unit time (frequency) of the top panel 120. Accordingly, the vibrating element 140 is driven in accordance with the driving signal so that the vibrating element 140 vibrates at a number of natural vibrations per unit time (natural vibration frequency) of the top panel 120.

The touch panel 150 is disposed on an upper side (positive side in Z axis direction) of the display panel 160 and is disposed on a lower side (negative side in Z axis direction) of the top panel 120. The touch panel 150 is one example of a coordinate detector that detects a position (in the following, the position is referred to as a position of the manipulation input) at which the user of the smartphone terminal 100 touches the top panel 120.

Various Graphic User Interface (GUI) buttons or the like (hereinafter referred to as GUI input part(s) are displayed on the display panel 160 disposed under the touch panel 150. Therefore, the user of the smartphone terminal 100 ordinarily touches the top panel 120 with a fingertip in order to manipulate the GUI manipulation part.

The touch panel 150 is any coordinate detector as long as it can detect the position of the manipulation input on the top panel 120 performed by the user. The touch panel 150 may be a capacitance type coordinate detector or a resistance film type coordinate detector, for example. Here, the embodiment in which the touch panel 150 is the capacitance type coordinate detector will be described. The capacitance type touch panel 150 can detect the manipulation input performed on the top panel 120 even if there is a clearance gap between the touch panel 150 and the top panel 120.

Also, although the top panel 120 is disposed on the input surface side of the touch panel 150 in the embodiment, the top panel 120 may be integrated with the touch panel 150. In this case, the surface of the touch panel 150 is equal to the surface of the top panel 120 illustrated in FIGS. 2 and 3, and the surface of the touch panel 150 constitutes the manipulation input surface. Also, the top panel 120 illustrated in FIGS. 2 and 3 may be omitted. In this case also, the surface of the touch panel 150 constitutes the manipulation input surface. In this case, the vibrating element 140 vibrates a member having the manipulation input surface at a natural vibration frequency of the member.

Also, in a case where the touch panel 150 is a capacitance type, the touch panel 150 may be disposed on the top panel 120. In this case also, the surface of the touch panel 150 constitutes the manipulation input surface. Also, in the case where the touch panel 150 is a capacitance type, the top panel 120 illustrated in FIGS. 2 and 3 may be omitted. In this case also, the surface of the touch panel 150 constitutes the manipulation input surface. In this case, the vibrating element 140 vibrates a member having the manipulation input surface at a natural vibration frequency of the member.

The display panel 160 is a display part that can display an image. The display panel 160 may be a liquid crystal display panel, an organic Electroluminescence (EL) panel or the like, for example. Inside the concave portion 111 of the housing 110, the display panel 160 is arranged on (the positive side in Z axis direction of) the substrate 170 using a holder and the like whose illustration is omitted.

The display panel 160 is driven and controlled by a driver Integrated Circuit (IC), which will be described later, and displays a GUI input part, an image, characters, symbols, graphics, or the like in accordance with an operating state of the smartphone terminal 100.

The substrate 170 is disposed inside the concave portion 111 of the housing 110. The display panel 160 and the touch panel 150 are disposed on the substrate 170. The display panel 160 and the touch panel 150 are fixed to the substrate 170 and the housing 110 by a holder or the like (not shown).

On the substrate 170, a drive controlling apparatus, which will be described later, and circuits or the like that are necessary for driving the smartphone terminal 100 are mounted.

In the smartphone terminal 100 having the configuration as described above, when the user touches the top panel 120 with the fingertip and a movement of the fingertip is detected, the drive controlling part mounted on the substrate 170 drives the vibrating element 140 to vibrate the top panel 120 at a frequency in the ultrasound frequency band. This frequency in the ultrasound frequency band is a resonance frequency of a resonance system including the top panel 120 and the vibrating element 140 and generates a standing wave in the top panel 120.

The smartphone terminal 100 generates the standing waves in the ultrasound frequency band to provide tactile sensations to the user through the top panel 120.

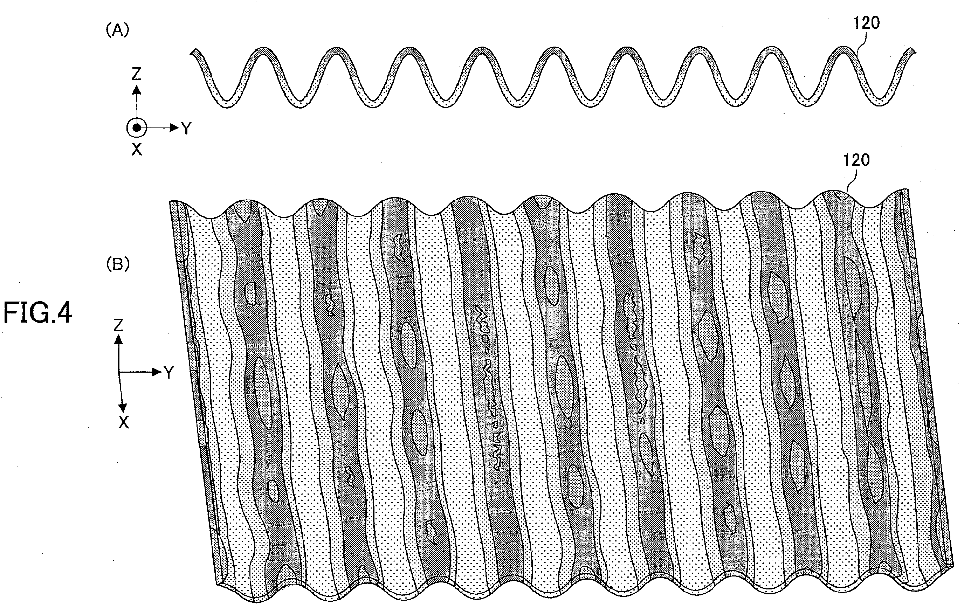

Next, the standing wave generated in the top panel 120 is described with reference to FIG. 4.

FIG. 4 is a diagram illustrating crests of the standing wave formed in parallel with the short side of the top panel 120 included in the standing waves generated in the top panel 120 by the natural vibration in the ultrasound frequency band. FIG. 4(A) is a side view, and FIG. 4(B) is a perspective view. In FIG. 4 (A) and 4(B), a XYZ coordinate system similar to that of FIGS. 2 and 3 is defined. It should be noted that in FIG. 4(A) and 4(B), the amplitude of the standing wave is overdrawn in an easy-to-understand manner. Also, the vibrating element 140 is omitted in FIG. 4(A) and 4(B).

The natural vibration frequency (the resonance frequency) f of the top panel 120 is represented by formulas (1) and (2) where E is the Young's modulus of the top panel 120, p is the density of the top panel 120, δ is the Poisson's ratio of the top panel 120, 1 is the long side dimension of the top panel 120, t is the thickness of the top panel 120, and k is a periodic number of the standing wave along the direction of the long side of the top panel 120. Because the standing wave has the same waveforms in every half cycle, the periodic number k takes values at 0.5 intervals. The periodic number k takes 0.5, 1, 1.5, 2 • • •.

$$f = \frac{\pi k^2 t}{l^2} \sqrt{\frac{E}{3\rho(1-\delta^2)}} \qquad (1)$$

$$f = \alpha k^2 \qquad (2)$$

It should be noted that the coefficient a included in formula (2) corresponds to coefficients other than $k^2$ included in formula (1).

A waveform of the standing wave illustrated FIG. 4(A) and 4(B) is a waveform of a case where the periodic number k is 10, for example. In a case where a sheet of Gorilla (registered trademark) glass of which the length 1 of the long side is 140 mm, the length of the short side is 80 mm, and the thickness t is 0.7 mm is used as the top panel 120, for example, the natural vibration number f is 33.5 kHz when the periodic number k is 10. In this case, a driving signal whose frequency is 33.5 kHz may be used.

The top panel 120 is a planar member. If the vibrating element 140 (see FIGS. 2 and 3) is driven and the natural vibration in the ultrasound frequency band is generated in the top panel 120, the top panel 120 is bent as illustrated in FIG. 4(A) and 4(B). As a result, the standing wave is generated in the surface of the top panel 120.

In the present embodiment, the single vibrating element 140 is bonded, on the negative side surface of the top panel 120 in Z axis direction, at the location along the short side extending in X axis direction at the positive side in Y axis direction. However, the smartphone terminal 100 may use two vibrating elements 140. In a case where the smartphone terminal 100 uses two vibrating elements 140, another vibrating element 140 may be bonded, on the positive side surface of the top panel 120 in Z axis direction, at a location along the short side extending in X axis direction at a negative side in Y axis direction. In this case, the two vibrating elements 140 may be axisymmetrically disposed with respect to a center line of the top panel 120 parallel to the two short sides of the top panel 120.

Further, in a case where the smartphone terminal 100 drives two vibrating elements 140, the two vibrating elements 140 may be driven in the same phase, if the periodic number k is an integer number. If the periodic number k is an odd number, the two vibrating elements 140 may be driven in opposite phases.

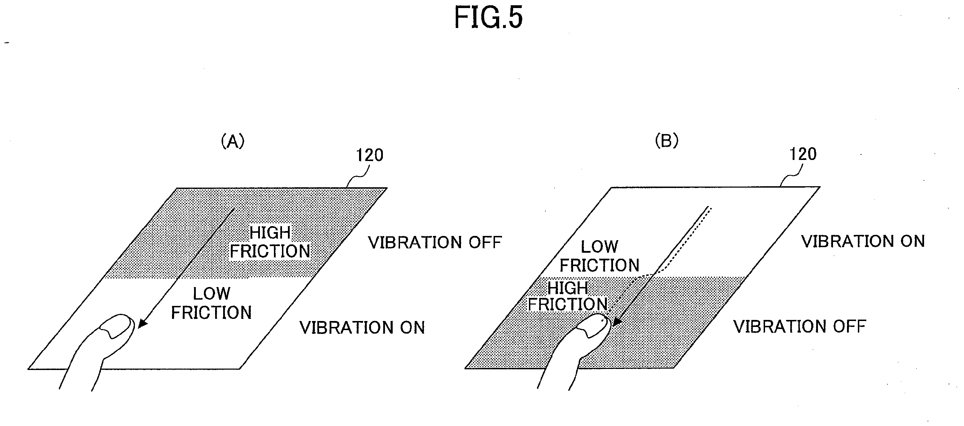

Next, the natural vibration in the ultrasound frequency band generated in the top panel 120 of the smartphone terminal 100 is described with reference to FIG. 5.

FIG. 5 is a diagram illustrating cases where a kinetic friction force applied to the fingertip performing the manipulation input varies when the natural vibration in the ultrasound frequency band is generated in the top panel 120 of the smartphone terminal 100. In FIG. 5(A) and 5(B), while touching the top panel 120 with the fingertip, the user performs the manipulation input by moving the finger along an arrow from a far side to a near side of the top panel 120. It should be noted that an on/off state of the vibration is switched by turning on/off the vibrating element 140 (see FIGS. 2 and 3).

Also, in FIG. 5(A) and 5(B), areas which the finger touches while the vibration is turned off are indicated in grey in the depth direction of the top panel 120. Areas which the finger touches while the vibration is turned on are indicated in white in the depth direction of the top panel 120.

As illustrated in FIG. 4, the natural vibration in the ultrasound frequency band occurs on of the entire top panel 120. FIG. 5 (A) and 5(B) illustrate operation patterns in which the on/off of the vibration is switched while the user's finger is tracing the top panel 120 from the far side to the near side.

Accordingly, in FIG. 5(A) and 5(B), areas which the finger touches while the vibration is turned off are indicated in grey in the depth direction of the top panel 120. Areas which the finger touches while the vibration is being turned on are indicated in white in the depth direction of the top panel 120.

In the operation pattern illustrated in FIG. 5(A), the vibration is turned off when the user's finger is located on the far side of the top panel 120, and the vibration is turned on in the process of moving the finger toward the near side.

On the contrary, in the operation pattern illustrated in FIG. 5(B), the vibration is turned on when the user's finger is located on the far side of the top panel 120, and the vibration is turned off in the process of moving the finger toward the near side.

Here, when the natural vibration in the ultrasound frequency band is generated in the top panel 120, a layer of air intervenes between the surface of the top panel 120 and the finger. The layer of air is provided by a squeeze film effect. Thus, a kinetic friction coefficient on the surface of the top panel 120 is decreased when the user traces the surface with the finger.

Accordingly, in the grey area located on the far side of the top panel 120 illustrated in FIG. 5(A), the kinetic friction force applied to the fingertip increases. In the white area located on the near side of the top panel 120, the kinetic friction force applied to the fingertip decreases.

Therefore, the user who is performing the manipulation input on the top panel 120 as illustrated in FIG. 5(A) senses a reduction of the kinetic friction force applied to the fingertip when the vibration is turned on. As a result, the user senses a slippery or smooth touch (texture) with the fingertip. In this case, the user senses as if a concave portion were present on the surface of the top panel 120 when the surface of the top panel 120 becomes slippery and the kinetic friction force decreases.

On the contrary, in the white area located on the far side of the top panel 120 illustrated in FIG. 5(B), the kinetic friction force applied to the fingertip decreases. In the grey area located on the near side of the top panel 120, the kinetic friction force applied to the fingertip increases.

Therefore, the user who is performing the manipulation input on the top panel 120 as illustrated in FIG. 5(B) senses an increase of the kinetic friction force applied to the fingertip when the vibration is turned off. As a result, the user senses a grippy or scratchy touch (texture) with the fingertip. In this case, the user senses as if a convex portion were present on the surface of the top panel 120 when the surface of the top panel 120 becomes grippy and the kinetic friction force increases.

As described above, the user can feel a concavity or convexity with the fingertip in the cases as illustrated in FIG. 5(A) and 5(B). For example, "The Printedmatter Typecasting Method for Haptic Feel Design and Sticky-band Illusion" (the Collection of papers of the 11th SICE system integration division annual conference (SI2010, Sendai)_174-177, 2010-12) discloses that a human can sense a concavity or a convexity. "Fishbone Tactile Illusion" (Collection of papers of the 10th Congress of the Virtual Reality Society of Japan (September, 2005)) discloses that a human can sense a concavity or a convexity as well.

Although a variation of the kinetic friction force when the vibration is switched on/off is described above, a variation of the kinetic friction force similar to those described above is obtained when the amplitude (intensity) of the vibrating element 140 is varied.

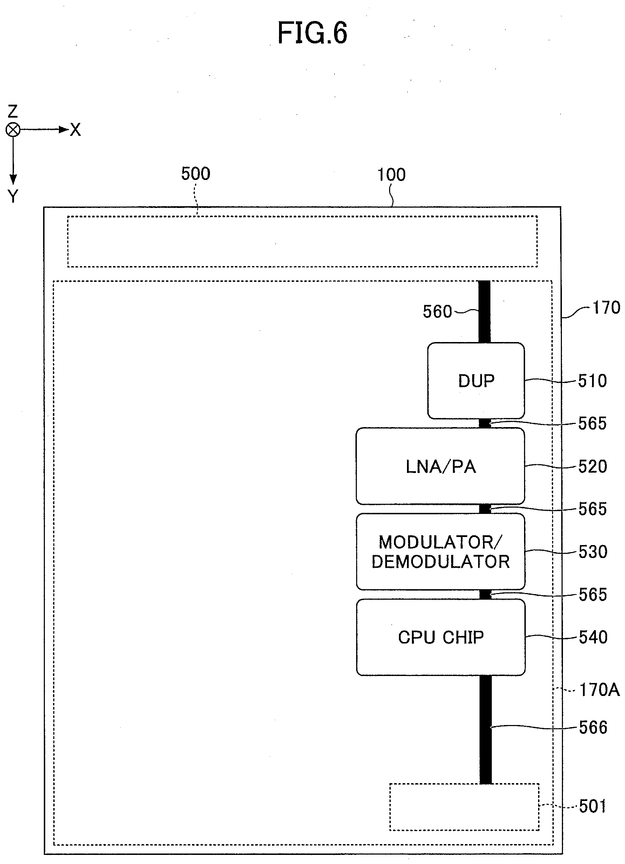

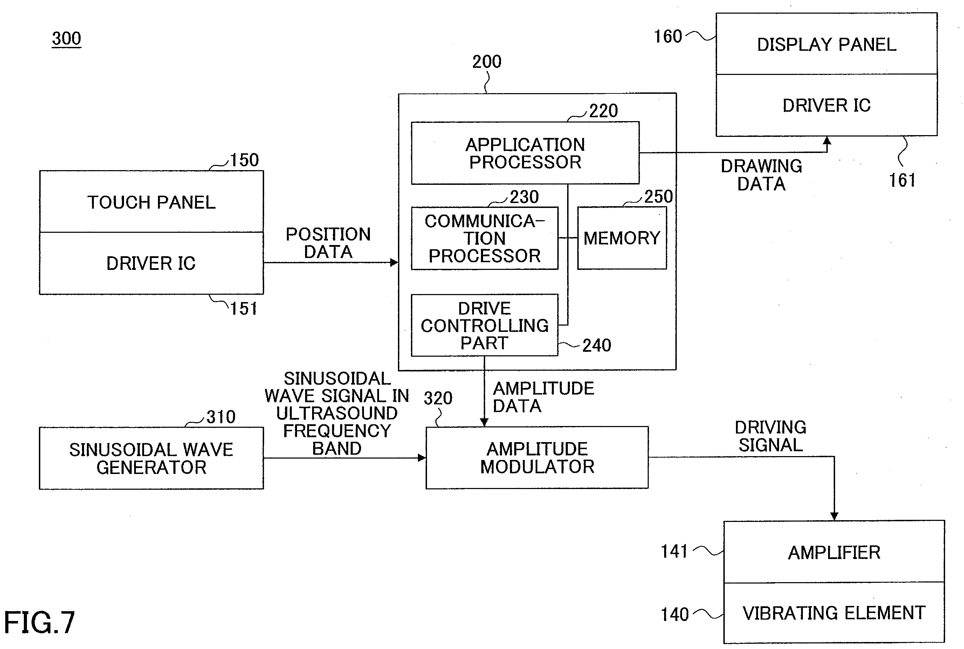

Next, a configuration of the smartphone terminal 100 of the embodiment will be described with reference to FIG. 6 and FIG. 7.

FIG. 6 is a diagram illustrating a configuration relating to a communication function of the smartphone terminal 100 of the embodiment.

The smartphone terminal 100 includes antenna apparatuses 500 and 501, a Duplexer (DUP) 510, a Low Noise Amplifier/Power Amplifier (LNA/PA) 520, a modulator/demodulator 530, and a Central Processing Unit (CPU) chip 540. Here, for example, the embodiment will be described in which these configuration elements are formed on the negative side surface of the substrate 170 in z axis direction.

Although the smartphone terminal 100 includes configuration elements other than these elements, the configuration elements relating to the communication function of the smartphone terminal 100 are extracted and illustrated in FIG. 6.

The antenna apparatus 500 includes a plurality of so-called monopole antenna elements. The plurality of antenna elements are designed to match a plurality of frequency bands, respectively. Here, because a specific shape of the antenna apparatus 500 is not limited particularly, a broken line illustrates an area where the antenna apparatus 500 is formed.

The antenna apparatus 501 is an antenna apparatus used for Near Field Communication such as Wifi and Bluetooth (registered trademark). The antenna apparatus 501 is installed at a position away from the antenna apparatus 500 so as to reduce correlation with the antenna apparatus 500.

The DUP 510, the LNA/PA 520, the modulator/demodulator 530, and the CPU chip 540 are connected via a wiring 565.

The DUP 510 is connected to a feed point of the antenna apparatus 500 via a wiring 560, and performs switching for transmission or reception. In a case where the antenna apparatus 500 receives signals having a plurality of frequencies, the DUP 510 can separate the signals having the respective frequencies inside the DUP 510 because the DUP 510 has a function as a filter.

The LNA/PA 520 amplifies electric power of a reception wave and electric power of a transmission wave. The modulator/demodulator 530 modulates the transmission wave and demodulates the reception wave. The CPU chip 540 has a function as a communicating processor to perform communication processing of the smartphone terminal 100 and a function as an application processor to execute an application program.

Further, the CPU chip 540 is connected to the antenna apparatus 501 via a wiring 566. It should be noted that the CPU chip 540 includes an internal memory that stores data to be transmitted, received data, or the like.

It should be noted that the antenna apparatuses 500 and 501 and the wirings 560, 565, and 566 are formed by patterning copper foil of the back surface of the substrate 170, for example. A bottom board 170A is formed inside of the substrate 170. It should be noted that the bottom board 170A may be a metallic holder for reinforcement disposed between the display panel 160 and the substrate 170.

FIG. 7 is a diagram illustrating a configuration of a tactile sensation providing apparatus 300 included in the smartphone terminal 100 of the embodiment.

The smartphone terminal 100 includes the vibrating element 140, an amplifier 141, the touch panel 150, a driver Integrated Circuit (IC) 151, the display panel 160, a driver IC 161, a controller 200, a sinusoidal wave generator 310, and an amplitude modulator 320.

The amplifier 141, the touch panel 150, the driver Integrated Circuit (IC) 151, the display panel 160, the driver IC 161, the controller 200, the sinusoidal wave generator 310, and the amplitude modulator 320 are disposed inside the housing 110 (see FIG. 3). For example, they are disposed on the negative side of the substrate 170 in z axis direction or the like.

The controller 200 includes an application processor 220, a drive controlling part 240, and a memory 250. The controller 200 is included in the CPU chip 540 illustrated in FIG. 6.

Here, although the embodiment, in which the application processor 220, the drive controlling part 240, and the memory 250 are realized by the single controller 200, is described, the drive controlling part 240 may be disposed outside the controller 200 as another IC chip or a processor. In this case, data that is necessary for drive control of the drive controlling part 240 among data stored in the memory 250 may be stored in another memory.

In FIG. 7, the housing 110, the top panel 120, the double-faced adhesive tape 130, and the substrate 170 (see FIG. 2) are omitted. Here, the amplifier 141, the driver IC 151, the driver IC 161, the drive controlling part 240, the memory 250, the sinusoidal wave generator 310, and the amplitude modulator 320 are described.

The amplifier 141 is disposed between the amplitude modulator 320 and the vibrating element 140. The amplifier 141 amplifies the driving signal output from the amplitude modulator 320 and drives the vibrating element 140.

The driver IC 151 is connected to the touch panel 150. The driver IC 151 detects position data representing the position on the touch panel 150 at which the manipulation input is performed and outputs the position data to the controller 200. As a result, the position data is input to the application processor 220 and the drive controlling part 240.

The driver IC 161 is connected to the display panel 160. The driver IC 161 inputs drawing data, output from the controller 200, to the display panel 160 and causes the display panel 160 to display an image that is based on the drawing data. In this way, the GUI input part, the image, or the like based on the drawing data is displayed on the display panel 160.

The application processor 220 outputs, to the driver IC 161, the drawing data that represents GUI input parts, images, characters, symbols, graphics, or the like necessary for the user to manipulate the smartphone terminal 100.

Further, in a case where the smartphone terminal 100 includes an application program that generates tactile sensation data, the application processor 220 generates the tactile sensation data based on image data and the like. In this case, the application processor 220 is an example of a tactile sensation data generating part.

The communication processor 230 executes processing necessary for performing communication using the antenna apparatus 500 (see FIG. 6) and for performing the near field communication such as WiFi, Bluetooth (registered trademark), or non-contact short distance communication using the antenna apparatus 501. The communication processor 230 serves as a transmitting part or a receiving part. It should be noted that the antenna apparatus 501 necessary for the near field communication and the antenna apparatus 500 are omitted in FIG. 7.

The drive controlling part 240 outputs amplitude data, representing an amplitude, to the amplitude modulator 320. The amplitude data is data representing an amplitude value for adjusting an intensity of the driving signal used to drive the vibrating element 140. The amplitude data representing the amplitude may be stored in the memory 250.

Also, the smartphone terminal 100 of the embodiment causes the top panel 120 to vibrate in order to vary the kinetic friction force applied to the fingertip when the user's fingertip moves along the surface of the top panel 120.

There are kinds of manipulation inputs such as a so-called flick operation, a swipe operation and a drag operation, for example, performed when the user moves the fingertip touching the surface of the top panel 120.

The flick operation is an operation performed by flicking (snapping) the surface of the top panel 120 for a relatively-short distance with the fingertip. The swipe operation is an operation performed by swiping the surface of the top panel 120 for a relatively-long distance with the fingertip. Also, the drag operation is an operation performed by moving the fingertip along the surface of the top panel 120 while selecting a button or the like displayed on the display panel 160 when the user slides the button of the like, for example.

The manipulation inputs that are performed by moving the fingertip touching the surface of the top panel 120, such as the flick operation, the swipe operation and the drag operation that are introduced as examples, are used differently depending on a kind of the GUI input part of the like displayed on the display panel 160.

In addition to the above described processing, the drive controlling part 240 may set the amplitude value in accordance with a temporal change degree of the position data.

Here, a moving speed of the user's fingertip moving along the surface of the top panel 120 is used as the temporal change degree of the position data. The drive controlling part 240 may calculate the moving speed of the user's fingertip based on a temporal change degree of the position data input from the driver IC 151.

The higher the moving speed becomes, the smaller the smartphone terminal 100 of the embodiment controls the amplitude value to be, for the sake of making an intensity of the tactile sensation sensed by the user constant regardless of the moving speed of the fingertip, for example. The lower the moving speed becomes, the greater the smartphone terminal 100 controls the amplitude value to be, for the sake of making the intensity constant regardless of the moving speed of the fingertip, for example.

Data that represents a relationship between the amplitude data, representing the amplitude value, and the moving speed may be stored in the memory 250.

It should be noted that although the amplitude value in accordance with the moving speed is set by using the data that represents the relationship between the amplitude data, representing the amplitude value, and the moving speed in the present embodiment, the amplitude value A may be calculated using the following formula (3). The higher the moving speed becomes, the smaller the amplitude value A calculated by formula (3) becomes. The lower the moving speed becomes, the greater the amplitude value A calculated by formula (3) becomes.

$$A = A_0 / \sqrt{|V|/a} \qquad (3)$$

Here, "$A_0$" is a reference value of the amplitude, "$V$" represents the moving speed of the fingertip and "a" is a designated constant value. In a case where the amplitude value A is calculated by using formula (3), data representing formula (3) and data representing the reference value $A_0$ and the designated constant value a may be stored in the memory 250.

The drive controlling part 240 vibrates the vibrating element 140 when the moving speed becomes greater than or equal to a predetermined threshold speed.

Accordingly, the amplitude value represented by the amplitude data output from the drive controlling part 240 becomes zero in a case where the moving speed is less than the designated threshold speed. The amplitude value is set to a designated amplitude value corresponding to the moving speed in a case where the moving speed is greater than or equal to the designated threshold speed. In a case where the moving speed is greater than or equal to the designated threshold speed, the higher the moving speed becomes, the smaller the amplitude value becomes. In a case where the moving speed is greater than or equal to the designated threshold speed, the lower the moving speed becomes, the greater the amplitude value becomes.

The memory 250 stores data that associates coordinate data with pattern data. The coordinate data represents the GUI input part or the like on which the manipulation input is performed. The pattern data represents the amplitude data.

The sinusoidal wave generator 310 generates sinusoidal waves required for generating the driving signal that causes the top panel 120 to vibrate at the natural vibration frequency. For example, in a case of causing the top panel 120 to vibrate at 33.5 kHz of the natural vibration frequency f, a frequency of the sinusoidal waves becomes 33.5 kHz. The sinusoidal wave generator 310 inputs a sinusoidal wave signal in the ultrasound frequency band to the amplitude modulator 320.

Using the amplitude data input from the drive controlling part 240, the amplitude modulator 320 modulates an amplitude of the sinusoidal wave signal, input from the sinusoidal wave generator 310, to generate the driving signal. In the basic operation, the amplitude modulator 320 modulates the amplitude of the sinusoidal wave signal in the ultrasound frequency band input from the sinusoidal wave generator 310 to generate the driving signal without modulating a frequency and a phase of the sinusoidal wave signal.

Therefore, the driving signal output from the amplitude modulator 320 is a sinusoidal wave signal in the ultrasound frequency band obtained by modulating only the amplitude of the sinusoidal wave signal in the ultrasound frequency band input from the sinusoidal wave generator 310. It should be noted that in a case where the amplitude data is zero, the amplitude of the driving signal becomes zero. This is the same as the amplitude modulator 320 not outputting the driving signal.

Further, the amplitude modulator 320 can modulate the sinusoidal wave signal in the ultrasound frequency band input from the sinusoidal wave generator 310 by using a sinusoidal wave signal in an audible frequency band. In this case, a driving signal output from the amplitude modulator 320 becomes a signal in which a driving signal in the audible frequency band is superimposed on a driving signal in the ultrasound frequency band and an amplitude of the signal is set by the amplitude modulator 320.

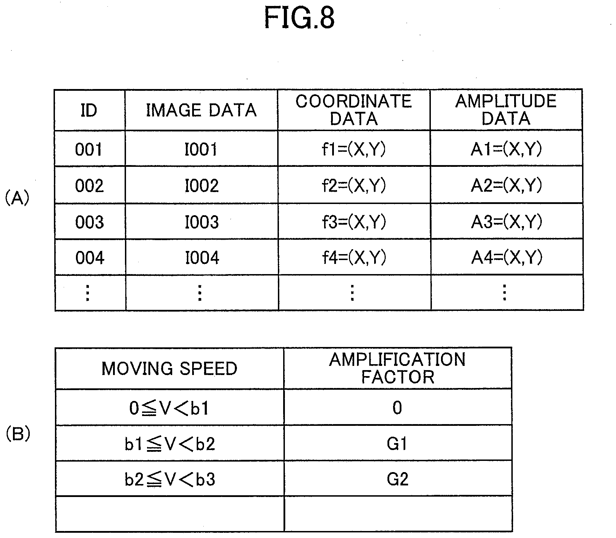

Next, the data stored in the memory 250 is described with reference to FIG. 8.

FIG. 8 is a diagram illustrating the data stored in the memory 250.

The data illustrated in FIG. 8(A) is tactile sensation data that associates image data, coordinate data, and amplitude data with ID (IDentification).

The ID is an identifier of the tactile sensation data. In FIG. 8(A), 001, 002, 003, 004, and the like are illustrated as an example of the ID.

The image data is data that represents an image of a target tangible object such as the image 510A of the dolphin illustrated in FIG. 1. In FIG. 8(A), I001, I002, I003, I004, and the like of the image data are illustrated.

The coordinate data is data that represents coordinates of the image in the image data. For example, coordinates may be allocated to each pixel. A constant number of pixels may be allocated to each unit area as single unit area. In FIG. 8(A), f1 to f4 of the coordinate data are illustrated.

The amplitude data is data that represents amplitude values for adjusting an intensity of the driving signal used to drive the vibrating element 140. The amplitude data is allocated to the area represented by each coordinate data. In FIG. 8(A), amplitude data A1 (X,Y), A2 (X,Y), A3 (X,Y), and A4 (X,Y) are illustrated.

For example, a shape, convex portions, concave portions, and the like of a surface of an actual target tangible object are measured by 3D scanning or the like. The amplitude values of the amplitude data allocated to the area represented by each coordinate data may be set as amplitude values in accordance with the measured values such that the user can sense the shape, the convex portions, the concave portions, and the like of the target tangible object with the fingertip based on the natural vibrations in the ultrasound frequency band of the top panel 120.

The data illustrated in FIG. 8(B) is data that associates amplification factor data representing an amplification factor of the amplitude value with the moving speed. According to the data illustrated in FIG. 8(B), the amplification factor is set to 0 in a case where the moving speed V is greater than or equal to 0 and less than b1 (0<=V<b1), the amplification factor is set to G1 in a case where the moving speed V is greater than or equal to b1 and less than b2 (b1<=V<b2), and the amplification factor is set to G2 in a case where the moving speed V is greater than or equal to b2 and less than b3 (b2<=V<b3).

For example, in order to make the tactile sensation sensed by the user's fingertip constant regardless of the moving speed of the fingertip, a lower amplitude value is set as the moving speed increases by using the amplification factor data illustrated in FIG. 8(B), and a higher amplitude value is set as the moving speed decreases by using the amplification factor.

It should be noted that according to the embodiment, tactile sensation data, generated by a server or inside of the smartphone terminal of the user A based on an image that the user holds, is transmitted to the smartphone terminal of the user B.

If types of smartphone terminals are different, dimensions of display panels that display image data, dimension of touch panels, coordinates in the display panels and the touch panels, and the natural vibration frequencies are different.

Accordingly, tactile sensation data may be generated in accordance with dimensions, coordinates, the natural vibration frequency, and the like of a smartphone terminal that is used.

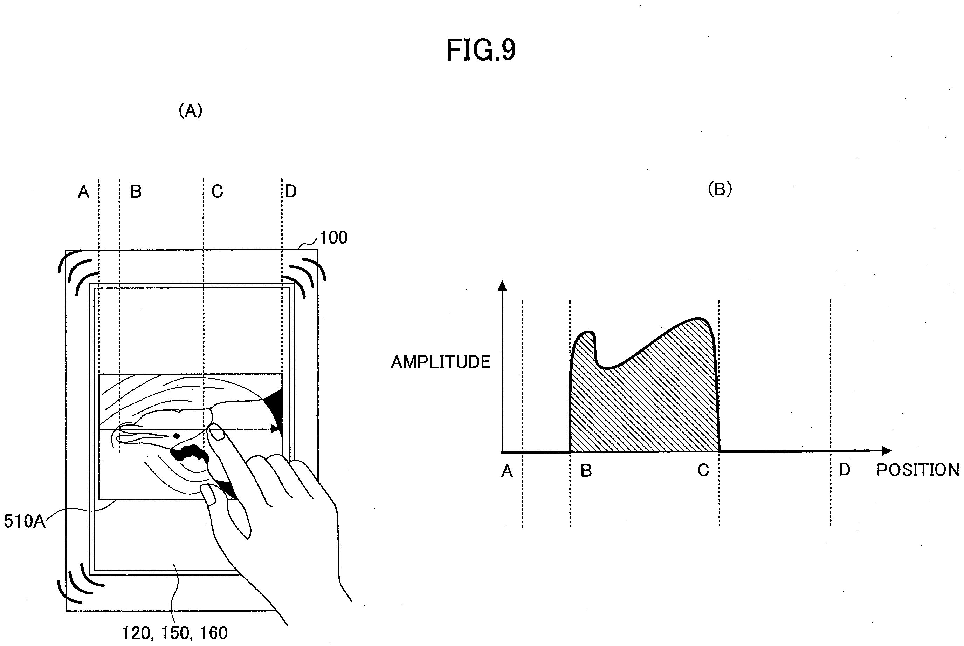

FIG. 9 is a diagram illustrating driving patterns of the vibrating element 140 in a case where the user performs the manipulation input on the smartphone terminal 100 of the embodiment.

FIG. 9(A) illustrates a situation where the user's fingertip touches the top panel 120 of the smartphone terminal 100 and traces the image 510A being displayed on the display panel 160.

In FIG. 9(B), a lateral axis indicates a position of the user's fingertip in the tracing direction of the image 510A in FIG. 9(A), and a vertical axis indicates an amplitude of the driving signal. Here, points A to D are illustrated in the lateral direction. FIG. 9(B) illustrates an example of driving patterns in a case where the user's fingertip traces the image 510A.

In FIG. 9, the manipulation input is started from point A. However, because point A is outside an area of the image 510A that represents the dolphin, the drive controlling part 240 does not drive the vibrating element 140 at this point of time. Therefore, the amplitude is zero.

When the user's fingertip moves and reaches point B, the drive controlling part 240 drives the vibrating element 140 based on the tactile sensation data because point B is inside of the area of the image 510A that represents the dolphin. Because the tactile sensation data includes the coordinate data and the amplitude data as illustrated in FIG. 8(A), the drive controlling part 240 outputs the amplitude data corresponding to the position data input from the driver IC 151.

When the position of the manipulation input moves to point C from point B, the drive controlling part 240 drives the vibrating element 140 using the driving patterns so that the amplitude exponentially increases at point B; after that, the amplitude decreases, after that, the amplitude increases toward point C, and after that, the amplitude decreases immediately before point C.

Such driving patterns between point B and point C provide, to the fingertip, the tactile sensations as if the kinetic friction force applied to the fingertip exponentially decreases from point B; after that, the kinetic friction force increases in accordance with decrease of the amplitude, after that, the kinetic friction force decreases again in accordance with increasing of the amplitude toward point C, and after that, the kinetic friction force increases immediately before point C in accordance with decreasing of the amplitude.

Such tactile sensations reproduce slippery tactile sensations that a human senses with the fingertip when the human touches a surface of an actual dolphin.

When the position of the user's fingertip has passed point C, the drive controlling part 240 stops the vibrating element 140 because the position of the manipulation input is outside the area of the image 510A that represents the dolphin. Therefore, between point C and point D, the amplitude is zero.

Such driving patterns represent a driving signal that changes the amplitude based on the amplitude data at a frequency of 35 kHz.

When the position of the manipulation input reaches the display area of the image 510A, the vibrating element 140 is turned on. Thereby, the kinetic friction coefficient applied to the user's fingertip is decreased by the squeeze film effect and the fingertip becomes easy to move on the surface of the top panel 120.

Further, when the position of the manipulation input reaches the display area of the image 510A, the drive controlling part 240 turns off the vibrating element 140. The drive controlling part 240 may turn off the vibrating element 140 by setting the amplitude data to zero.

When the vibrating element 140 is turned off, the natural vibration in the ultrasound frequency band of the top panel 120 is turned off. Accordingly, the kinetic friction force applied to the user's fingertip increases and the user senses a grippy or scratchy touch (texture) with the fingertip. Then, the user feels as if a convex portion were present on the surface of the top panel 120 when the fingertip becomes grippy and the kinetic friction force increases.

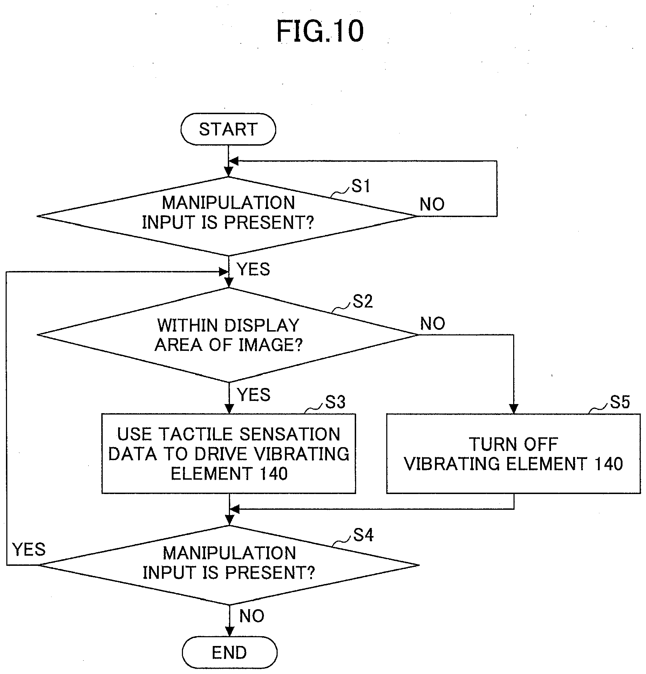

FIG. 10 is a diagram illustrating a flowchart illustrating processing executed by the drive controlling part 240 of the smartphone terminal 100 of the embodiment.

First, the drive controlling part 240 determines whether the manipulation input is present (step S1). The drive controlling part 240 may determine presence/absence of the manipulation input based on whether the position data is input from the driver IC 151 (FIG. 7).

When the drive controlling part 240 determines that the manipulation input is present (YES at S1), the drive controlling part 240 determines whether a position of the manipulation input is within the display area of the image 510A (step S2). This is because a driving state (on/off) of the vibrating element 140 varies depending on whether the position is within the display area of the image 510A.

When the drive controlling part 240 determines that the position of the manipulation input is within the display area of the image 510A (YES at S2), the flow proceeds to step S3.

The drive controlling part 240 uses the tactile sensation data to drive the vibrating element 140 (step S3). The drive controlling part 240 extracts, from the tactile sensation data, amplitude data corresponding to the position data input from the driver IC151, to output the amplitude data. In this way, the vibrating element 140 is driven based on the amplitude data.

Next, the drive controlling part 240 determines whether the manipulation input is present (step S4). The drive controlling part 240 may determine presence/absence of the manipulation input based on whether the position data is input from the driver IC 151 (FIG. 7).

When the drive controlling part 240 determines that the manipulation input is present (YES at S4), the flow returns to step S2.

In contrast, when the drive controlling part 240 determines that the manipulation input is not present (NO at S4), a series of processing ends (END). This is because the drive controlling part 240 does not have to drive the vibrating element 140 in a case where the manipulation input is not present because the user does not perform the manipulation input in this case.

It should be noted that when the drive controlling part 240 determines that the position of the manipulation input is not within the display area of the image 510A (NO at S2), the flow proceeds to step S4. Presence/absence of the manipulation input is determined at step S4. When the manipulation input is present, the flow returns to step S2.

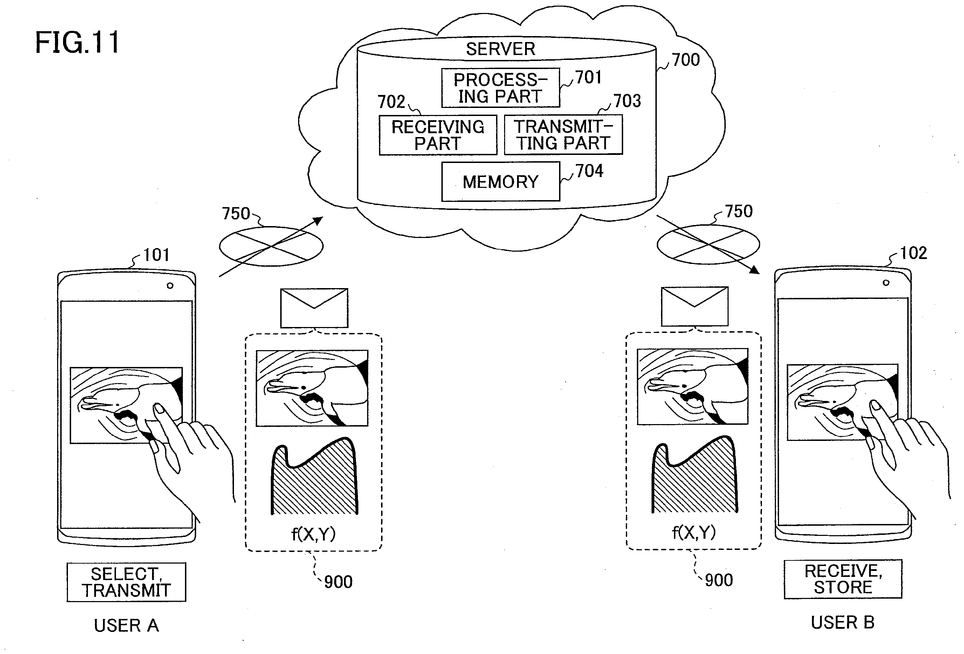

FIG. 11 is a diagram illustrating procedures until the tactile sensation data transmitted by the user A of the smartphone terminal 100 of the embodiment is received by another user B.

Both a smartphone terminal 101 of the user A and a smartphone terminal 102 of the user B are connected to a server 700 via a network 750. That is, the smartphone terminals 101 and 102 are connected to each other via the network 750 and the server 700 in a communicative state.

For example, the smartphone terminals 101 and 102 are the same model and are similar to the smartphone terminal 100 illustrated in FIG. 6. Here, the smartphone terminal 101 is an example of a first portable electronic terminal. The smartphone terminal 102 is an example of a second portable electronic terminal.

Here, the server 700 includes a processing part 701, a receiving part 702, a transmitting part 703, and a memory 704. The processing part 701 is a section that performs control of transmission/reception of data in the server 700, processing of data, management of data, and the like. The processing part 701 is realized by a CPU core and the like. The server 700 is an example of a tactile sensation data processing apparatus.

The receiving part 702 is a section that becomes an interface when the server 700 receives the data via the network 750. The receiving part 702 is an example of a data receiving part. The transmitting part 703 is a section that becomes an interface when the server 700 transmits the data via the network 750. The transmitting part 703 is an example of a data transmitting part. The memory 704 stores data that the server 700 deals with.

First, as illustrated in FIG. 10, the user A selects tactile sensation data 900 stored in the smartphone terminal 101, attaches the tactile sensation data 900 to e-mail, and transmits the tactile sensation data 900 to the server 700 via the network 750. A destination of the e-mail is the user B. The receiving part 702 of the server 700 receives the e-mail to which the tactile sensation data 900 is attached. The transmitting part 703 transmits the e-mail to the user B.

The user B receives, from the server 700, the e-mail to which the tactile sensation data is attached via the network 750, and stores the tactile sensation data in an internal memory. Thus, the user B can enjoy tactile sensations by the tactile sensation data 900 using the smartphone terminal 102.

Although the portable phone that transmits the tactile sensation data 900 by attaching the tactile sensation data 900 to e-mail has been described here, the embodiment for transmitting the tactile sensation data 900 to the user B from the user A via the network 750 and the server 700 may be an embodiment other than that of attaching the tactile sensation data 900 to e-mail. For example, the user A may use Social Networking Service (SNS) to transmit the tactile sensation data 900, in the embodiment other than that of attaching the tactile sensation data 900 to e-mail.

Here, the tactile sensation data 900, which is transmitted to the server 700 via the network 750 from the user A, is an example of first data.

Further, in a case where models of the smartphone terminals 101 and 102 are different, after the processing part 701 performs conversion processing, for the smartphone terminal 102, to optimize the tactile sensation data 900 to be transmitted to the server 700 from the smartphone terminal 101, the tactile sensation data, on which the conversion processing has been performed, may be transmitted to the smartphone terminal 102.

As described above, for example, the smartphone terminal 101 may include the application program that generates the tactile sensation data 900 so that the user A holds the tactile sensation data 900 in the smartphone terminal 101. Here, with reference to FIG. 1, procedures where the user A generates the tactile sensation data 900 using the smartphone terminal 101 are described.

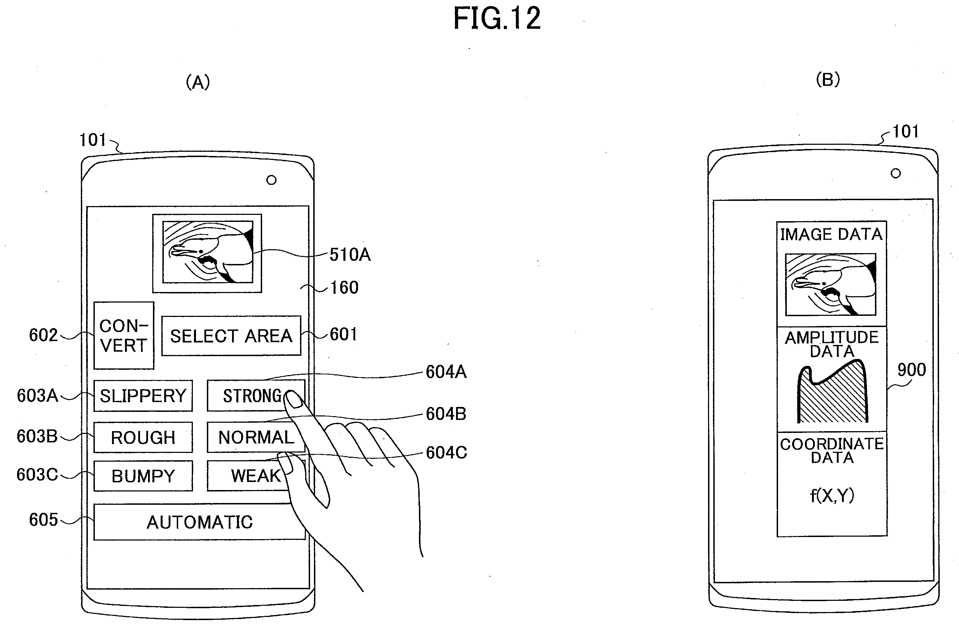

FIG. 12 is a diagram illustrating a situation in which the user A generates the tactile sensation data 900 using the smartphone terminal 101.

FIG. 12(A) illustrates the display of the display panel 160 of the smartphone terminal 101 when executing the application program that generates the tactile sensation data 900. As illustrated in FIG. 12(A), the image 510A, an area selecting button 601, a converting button 602, tactile sensation selecting buttons 603A, 603B, and 603C, vibration level selecting buttons 604A, 604B, and 604C, and an automatic button 605 are displayed on the display panel 160. These buttons are realized by GUI components.

The user A manipulates the touch panel 150 of the smartphone terminal 101 to select a photograph of which the tactile sensation data 900 (see FIG. 11) is desired to be created. For example, the user A drags and selects an area of which tactile sensation data is desired to be created in the selected photograph, and manipulates the area selecting button 601 and determines the manipulation. In FIG. 12(A), it is supposed that the image 510A of the dolphin is selected and the area selecting button 601 is manipulated.

The user manipulates any of the tactile sensation selecting buttons 603A, 603B, and 603C to select a tactile sensation, and selects any of the vibration level selecting buttons 604A, 604B, and 604C to select a vibration level.

Here, the tactile sensation selecting buttons 603A, 603B, and 603C are GUI buttons for selecting a slippery tactile sensation, a rough tactile sensation, and a bumpy tactile sensation, respectively. The vibration level selecting buttons 604A, 604B, and 604C are buttons for selecting a strong vibration level, a normal vibration level, and a weak vibration level of three stages, respectively. It should be noted that the selection of the vibration level may be realized by selecting the amplification factor (see FIG. 8(B)) when the smartphone terminal 101 drives the vibrating element 140.

After completing the selection of the tactile sensations and the vibration levels, the user manipulates the converting button 602. Thereby, based on the data of the image 510A and the data representing the tactile sensations and the vibration levels, the application program generates the tactile sensation data 900 as illustrated in FIG. 12(B).

The tactile sensation data can be created by an automatic mode. When the user selects the image 510A, manipulates the automatic button 605, and manipulates the converting button 602, the application program, which generates the tactile sensation data 900, performs image processing such as binarization processing on the image 510A to make patterns. Vibration patterns are automatically calculated in accordance with the binarized data to create the tactile sensation data.

In this way, it is also possible to create the tactile sensation data automatically. FIG. 12 (B) schematically illustrates a situation where the tactile sensation data 900, including the image data of the dolphin, the amplitude data of the dolphin, and the coordinate data f (X,Y) of the dolphin, is generated.

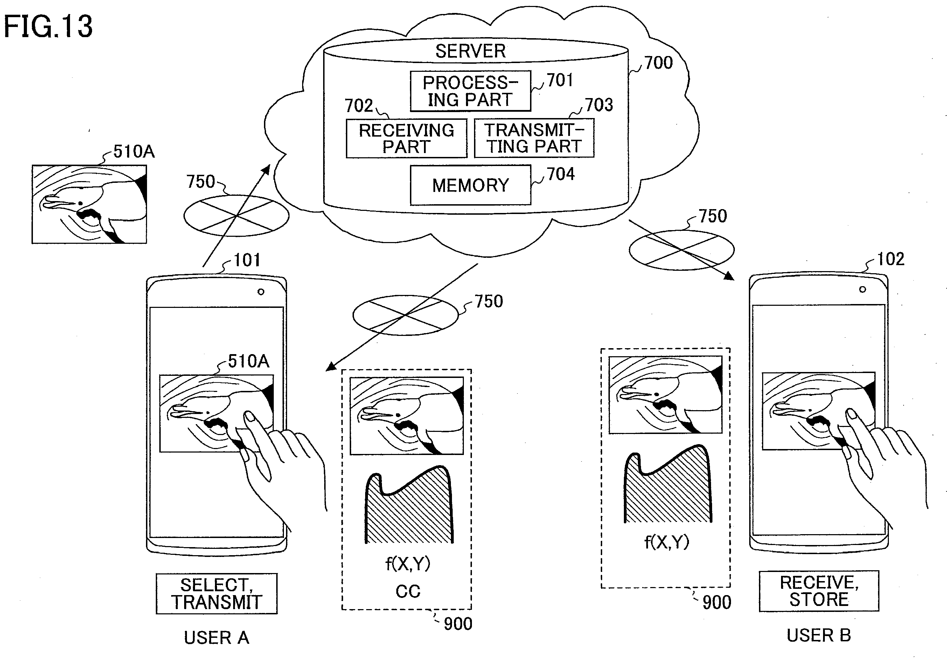

FIG. 13 is a diagram describing procedures of when the tactile sensation data is created in the server 700 based on image data transmitted to the server 700 from the smartphone terminal 101 and the tactile sensation data is transmitted to the smartphone terminals 101 and 102.

The application program installed in the smartphone terminal 101 illustrated in FIG. 13 for creating the tactile sensation data 900 does not generate the tactile sensation data 900 inside of the smartphone terminal 101. The application program, installed in the smartphone terminal 101 illustrated in FIG. 13, is an application program having a function to generate the tactile sensation data in the server 700.

FIG. 13 illustrates procedures where the user A selects the image 510A to transmit the image 510A to the server 700, the tactile sensation data 900 is generated in the server 700, and the tactile sensation data 900 is transmitted to the user B. In this case, the tactile sensation data 900 may also be transmitted to the user A when the user A is included in the Carbon Copy (CC) field as transmission destinations of the tactile sensation data 900 in addition to the user B.

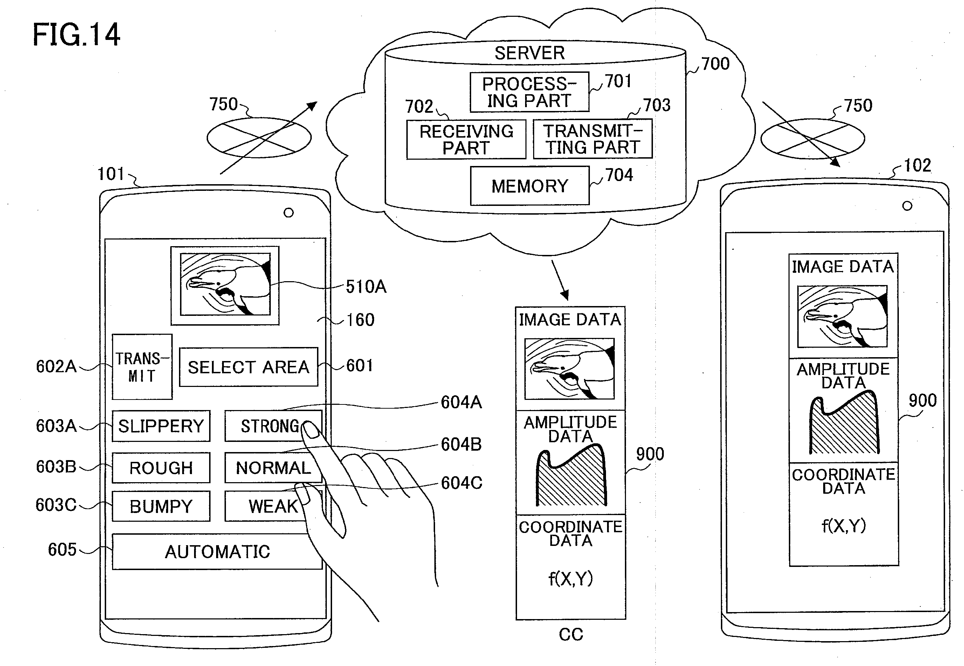

FIG. 14 is a diagram illustrating the procedures illustrated in FIG. 13 more specifically.

The smartphone terminal 101 illustrated in FIG. 14 is executing an application for creating the tactile sensation data. The image 510A, an area selecting button 601, a transmitting button 602A, tactile sensation selecting buttons 603A, 603B, and 603C, vibration level setting buttons 604A, 604B, and 604C, and an automatic button 605 are displayed on the display panel 160. These buttons are realized by GUI components.

The user manipulates the touch panel 150 of the smartphone terminal 101 to select a photograph of which tactile sensation data is desired to be created. For example, the user drags and selects an area of which tactile sensation data is desired to be created in the selected photograph, and manipulates the area selecting button 601 and determines the manipulation. In FIG. 13, it is supposed that the image 510A of the dolphin is selected and the area selecting button 601 is manipulated.

The user manipulates any of the tactile sensation selecting buttons 603A, 603B, and 603C to select a tactile sensation, and selects any of the vibration level selecting buttons 604A, 604B, and 604C to select a vibration level.

Here, the tactile sensation selecting buttons 603A, 603B, and 603C are GUI buttons for selecting a slippery tactile sensation, a rough tactile sensation, and a bumpy tactile sensation, respectively. The vibration level selecting buttons 604A, 604B, and 604C are buttons for selecting a strong vibration level, a normal vibration level, and a weak vibration level of three stages, respectively. It should be noted that the selection of the vibration level may be realized by selecting the amplification factor (see FIG. 7B) when the smartphone terminal 100 drives the vibrating element 140.

After completing the selection of the vibration levels and the tactile sensations, the user A specifies a destination to which the tactile sensation data is to be transmitted. Here, the transmission destination is the user B, and the user A is set in CC field.

When the user manipulates the transmitting button 602A, the data of the image 510A and the data representing the tactile sensations and the vibration levels are transmitted to the server 700 via the network and received by the receiving part 702. Then, the tactile sensation data is created by the processing part 701 of the server 700.

In the server 700, patterns are made by performing image processing such as binarization processing on the data of the image 510A and vibration patterns are automatically calculated in accordance with the binarized data to create the tactile sensation data 900.

Then, while transmitting the tactile sensation data 900 to the user B, the transmitting part 703 of the server 700 transmits the tactile sensation data 900 to the user A as CC. The users A and B may store the tactile sensation data 900 in the smartphone terminals 101 and 102, respectively.

It should be noted that data may be transmitted between the smartphone terminal 101, the server 700, and the smartphone terminal 102 by attaching the data to e-mail, and the data may be transmitted using another embodiment.

Further, in a case where models of the smartphone terminals 101 and 102 are different, after the processing part 701 performs conversion processing, for the smartphone terminal 102, to optimize the tactile sensation data 900 to be transmitted to the server 700 from the smartphone terminal 101, the tactile sensation data, on which the conversion processing has been performed, may be transmitted to the smartphone terminal 102.

In this case, the tactile sensation data 900 that is transmitted to the smartphone terminal 101 as CC and the tactile sensation data, on which the conversion processing has been performed, that is transmitted to the smartphone terminal 102 are different in amplitude values of amplitude data, coordinate data, and/or the like.

Here, the embodiment, in which the tactile sensation data is created in the server 700 based on the image data transmitted to the server 700 from the smartphone terminal 101, has been described. The image data, which is transmitted to the server 700 from the smartphone terminal 101, is an example of the first data.

However, data that specifies image data stored in the server 700 may be transmitted to the server 700 from the smartphone terminal 101 instead of transmitting the image data to the server 700 from the smartphone terminal 101. In this case, the data that specifies the image data is an example of the first data.

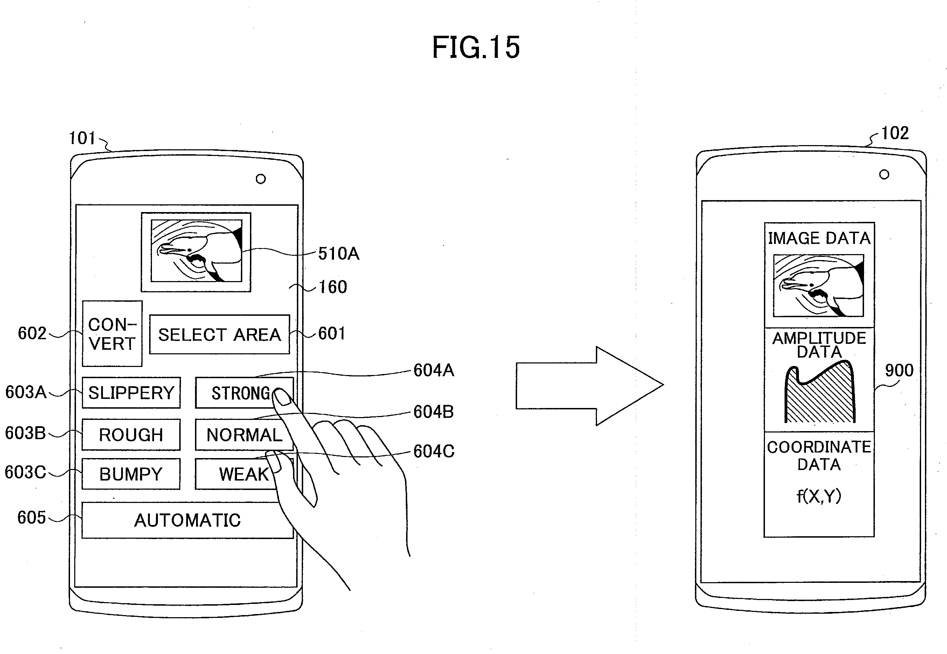

FIG. 15 is a diagram illustrating a situation in which the user A uses the smartphone terminal 101 to transmit the tactile sensation data 900 to the smartphone terminal 102 of the user B by near field wireless communication.

FIG. 15 illustrates the display of the display panel 160 of the smartphone terminal 101 when executing the application program that generates the tactile sensation data 900. This is similar to the state illustrated in FIG. 12(A).

The user A uses the application program to create the tactile sensation data 900 according to procedures similar to the procedures described in FIG. 12(A).

Then, the near field wireless communication by the communication processor 230 is started up to transmit the tactile sensation data to the smartphone terminal 102 of the user B. For example, the Bluetooth may be activated to transmit the tactile sensation data to the smartphone terminal 102 from the smartphone terminal 101.

In this way, the smartphone terminal 101 can transmit the tactile sensation data to the smartphone terminal 102 with the near field wireless communication such as the Bluetooth not only by transmitting data via the network 750 and the server 700. It should be noted that the smartphone terminals 101 and 102 may be connected using a Universal Serial Bus (USB) cable to transmit the tactile sensation data 900 via the USB cable.

As described above, according to the smartphone terminal 100 of the embodiment, it becomes possible to provide fine tactile sensations to the user because the kinetic friction force applied to the user's fingertip is varied by generating the natural vibration in the ultrasound frequency band of the top panel 120.

Further, the smartphone terminal 100 of the embodiment outputs the amplitude data in accordance with a position of the manipulation input by using the tactile sensation data that associates the coordinate data with the amplitude data. The coordinate data represents coordinates of an image in the image data. The amplitude data represents the amplitude values for adjusting the intensity of the driving signal used to drive the vibrating element 140.

Thus, when the user traces the image of the target tangible object displayed on the display panel 160 of the smartphone terminal 100, the tactile sensations can be provided to the user as if the user were tracing the actual surface of the target tangible object.

In particular, in a case where a target tangible object is an art object, a craft object, or the like and the actual object cannot be touched, usability is high because simulated tactile sensations can be experienced by using the smartphone terminal 100 of the embodiment.

Further, the smartphone terminal 100 (see FIGS. 1 to 3) of the embodiment generates the driving signal by causing the amplitude modulator 320 to modulate only the amplitude of the sinusoidal wave in the ultrasound frequency band output from the sinusoidal wave generator 310. The frequency of the sinusoidal wave in the ultrasound frequency band generated by the sinusoidal wave generator 310 is equal to the natural vibration frequency of the top panel 120. Further, the natural vibration frequency is set in consideration of the vibrating element 140.

That is, the driving signal is generated by the amplitude modulator 320 modulating only the amplitude of the sinusoidal wave in the ultrasound frequency band generated by the sinusoidal wave generator 310 without modulating the frequency or the phase of the sinusoidal wave.

Accordingly, it becomes possible to generate, in the top panel 120, the natural vibration in the ultrasound frequency band of the top panel 120 and to reduce the kinetic friction coefficient applied to the finger tracing the surface of the top panel 120 with absolute certainty by utilizing the layer of air provided by the squeeze film effect. Further, it becomes possible to provide the fine tactile sensations to the user as if the concave portion and the convex portion were present on the surface of the top panel 120 by utilizing the Sticky-band Illusion effect or the Fishbone Tactile Illusion effect.

In the embodiment described above, in order to provide the tactile sensations to the user as if the concave portions and the convex portions were present on the top panel 120, the vibrating element 140 is switched on/off. Turning off the vibrating element 140 is equal to setting the amplitude value, represented by the driving signal used to drive the vibrating element 140, to zero.

However, it is not necessary to turn off the vibrating element 140 from a turned on state in order to provide such tactile sensations. For example, the vibrating element 140 may be driven to reduce the amplitude instead of turning off the vibrating element 140. For example, similar to turning the vibrating element 140 from on to off, the smartphone terminal 100 may provide the tactile sensations to the user as if the concave portion and the convex portion were present on the top panel 120 by reducing the amplitude to about one-fifth of that of the turned on state.

In this case, the vibrating element 140 is driven by the drive signal such that the strength of the vibration of the vibrating element 140 is switched. As a result, the strength of the natural vibration generated in the top panel 120 is switched. It becomes possible to provide the tactile sensations to the user's fingertip as if the concave portion and the convex portion were present on the surface of the top panel 120.

If the vibrating element 140 is turned off when making the vibration weaker in order to switch the strength of the vibration of the vibrating element 140, on/off of the vibrating element 140 is switched. Switching on/off the vibrating element 140 means driving the vibrating element 140 intermittently.

Further, according to the embodiment, it becomes possible to transmit, to the smartphone terminal 102 of the user B, the tactile sensation data 900 generated based on the data on the image 510A stored in the smartphone terminal 101 of the user A.

The tactile sensation data 900 may be generated by executing the application program inside of the smartphone terminal 101 or may be generated by the server 700.

A transmission path may be a path through the network 750 and the server 700. Further, the transmission path may be a path for directly transmitting data from the smartphone terminal 101 to the smartphone terminal 102 with the near field communication without passing through the network 750 and the server 700.

As described above, according to the embodiment, it becomes possible to provide the smartphone terminal 100 that can provide the good tactile sensations.

It should be noted that although the embodiment, which provides the tactile sensations of the dolphin, is described above, the target tangible object may be any tangible object such as various art objects, museum goods, craft objects, paintings, books, Buddha statues, bronze statues, creatures, natural objects, and artificial objects.

Further, although the user can privately have the smartphone terminal 100 to use smartphone terminal 100 at any place, the embodiment is not limited to this. The smartphone terminal 100 may be installed in various places such as a museum, an art museum, a school, a library, and a commercial facility.

Further, although the smartphone terminals 100, 101, and 102 have been described above as an example of the portable electronic terminal, the portable electronic terminal may be a tablet computer, a game machine, or the like.

In the following, variation examples of the smartphone terminal 100 and the like are described.

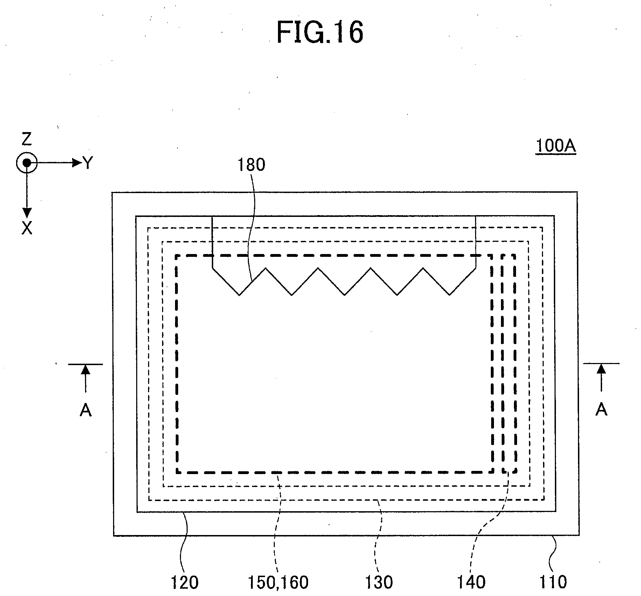

FIG. 16 is a diagram illustrating a smartphone terminal 100A according to a first variation example of the embodiment.

In the smartphone terminal 100A, a heater 180 is added to the smartphone terminal 100 illustrated in FIGS. 1 to 3. Other configurations of the smartphone terminal 100A are similar to the smartphone terminal 100 illustrated in FIGS. 1 to 3.

The heater 180 (see FIG. 16) is disposed on a back face side of the top panel 120 in order to control a temperature of the surface of the top panel 120. For convenience of description, FIG. 16 illustrates one heating wire as the heater 180. However, the heater 180 may be provided all over the face of the top panel 120. Also, the heater 180 may be disposed on the back side of the touch panel 150 or the back side of the display panel 160. Also, the heater 180 may be a resistant form transparent conductive film, an alloy heater such as a nickel alloy heater, or the like. For example, the heater 180 can increase the temperature from an ambient temperature to about 60 °C.

Also, an element that can lower the temperature to a temperature lower than the ambient temperature such as a Peltier element may be used instead of the heater 180 or in addition to the heater 180.

For example, in a case of displaying a warm object as a target tangible object, by causing the user to feel warmth in addition to the tactile sensations according to the vibrations, more realistic tactile sensations can be provided to the user. In a case of displaying a cold object as a target tangible object, by causing the user to feel coldness in addition to the tactile sensations according to the vibrations, more realistic tactile sensations can be provided to the user.

It should be noted that a set temperature of the heater 180 may be a predetermined fixed temperature depending on a kind of the target tangible object. In a case where tactile sensations of a target tangible object having a temperature distribution depending on regions are provided, a plurality of heaters 180 may be provided and temperature data that represents a set temperature of each heater 180 may be added to the tactile sensation data to express the temperature distribution of the target tangible object.

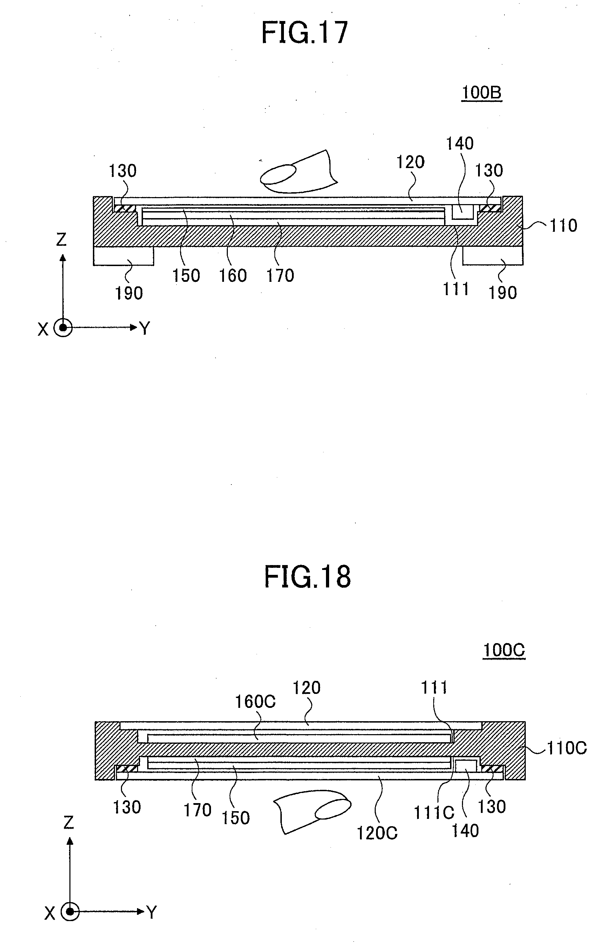

FIG. 17 is a diagram illustrating a smartphone terminal 100B according to a second variation example of the embodiment.

In the smartphone terminal 100B, actuators 190 are added to the smartphone terminal 100 illustrated in FIGS. 1 to 3. Other configurations of the configurations of the smartphone terminal 100B are similar to the smartphone terminal 100 illustrated in FIGS. 1 to 3.

The actuators 190 are disposed on a back face side of the housing 110 (negative side in Z axis direction). For example, four actuators 190 are disposed on respective four corners in plan view. For example, the actuators 190 are driven by a driving signal at frequencies in an audible frequency band.

For example, a linear actuator using a servomotor or a stepping motor may be used for the actuator 190. The actuators 190 vibrate the entire smartphone terminal 100B. It should be noted that the audible frequency band is a frequency band about less than 20 kHz. Here, for example, the actuators 190 are driven by a driving signal of several dozen Hz order. It is preferable that such actuators 190 can generate displacement about 100 μm to 1 mm, for example. It should be noted that the drive controlling part 240 or an equivalent drive controlling part may drive the actuators 190.

In this way, when the smartphone terminal 100B itself vibrates, the vibration in which the natural vibration in the ultrasound frequency band by the vibration of the vibrating element 140 and the vibration in the audible frequency band by the actuators 190 are combined can be provided to the user's fingertip touching the surface of the top panel 120.

Depending on the feel on a surface of a target tangible object, there may be a case where more realistic tactile sensations can be provided by adding the vibration in the audible frequency band to the vibration of the standing wave caused by the natural vibration in the ultrasound frequency band.

In such a case, the smartphone terminal 100B of the second variation example is effective.

It should be noted that the actuator 190 does not have to be the linear actuator using the servomotor or the stepping motor. An electric driving element, an oil hydraulic driving element, a pneumatic driving element, a piezoelectric actuator, an artificial muscle, or the like may be used.

FIG. 18 is a diagram illustrating a smartphone terminal 100C according to a third variation example of the embodiment. The cross section illustrated in FIG. 18 corresponds to the cross section taken along the line A-A illustrated in FIG. 3. In FIG. 18, a XYZ coordinate system, which is a rectangular coordinate system, similar to that illustrated in FIG. 3 is defined.

The smartphone terminal 100C includes a housing 110C, the top panel 120, a panel 120C, the double-faced adhesive tape 130, the vibrating element 140, the touch panel 150, a display panel 160C, and the substrate 170.

The smartphone terminal 100C includes a configuration in which the touch panel 150 of the smartphone terminal 100 illustrated in FIG. 3 is provided on the back face side (negative side in Z axis direction). Thus, in comparison with the smartphone terminal 100 illustrated in FIG. 3, the double-faced adhesive tape 130, the vibrating element 140, the touch panel 150, and the substrate 170 are disposed on the back face side.

A concave portion 111 at a positive side in z axis direction and a concave portion 111C at a negative side in z axis direction are formed on the housing 110C. The display panel 160C is disposed inside of the concave portion 111 and is covered with the top panel 120. Also, the substrate 170 and the touch panel 150 are layered and disposed inside of the concave portion 111C. The panel 120C is secured to the housing 110C with the double-faced adhesive tape 130. The vibrating element 140 is disposed on a positive side surface of the panel 120C in z axis direction.

When the vibrating element 140 is switched on/off to generate the natural vibration in the ultrasound frequency band in the panel 120C in accordance with the manipulation input onto the panel 120C in the smartphone terminal 100C illustrated in FIG. 18, similar to the smartphone terminal 100 illustrated in FIG. 3, it becomes possible to provide the smartphone terminal 100C with which the user can sense exchange of pictorial symbols (goods) displayed on the display panel 160C through the fingertip.

Such a smartphone terminal 100C may be used instead of the smartphone terminal 100 illustrated in FIGS. 1 to 3. It should be noted that FIG. 18 illustrates the smartphone terminal 100C in which the touch panel 150 is provided on the back face side. However, the touch panels 150 may be provided on both the front face side and the back face side by combining the structure illustrated in FIG. 3 and the structure illustrated in FIG. 18.

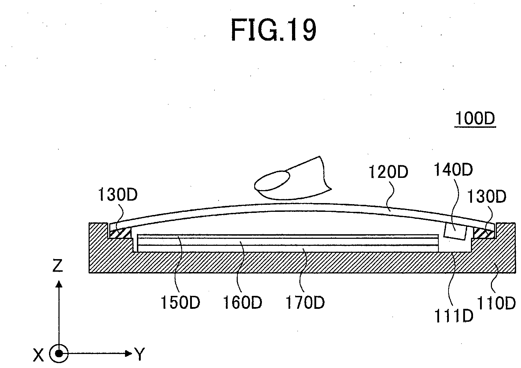

FIG. 19 is a plan view illustrating an operating state of a smartphone terminal 100D according to a fourth variation example of the embodiment.

The smartphone terminal 100D includes a housing 110D, a top panel 120D, a double-faced adhesive tape 130D, a vibrating element 140D, a touch panel 150D, a display panel 160D and a substrate 170D.

The smartphone terminal 100D illustrated in FIG. 19 is similar to the configuration of the smartphone terminal 100 of the embodiment illustrated in FIG. 3 except for the top panel 120D being a curved glass.

The top panel 120D is curved so that its center portion in plan view protrudes towards a positive side in z axis direction. Although FIG. 19 illustrates a cross-section shape of the top panel 120D in a YZ plane, a cross-section shape in a XZ plane is similar the cross-section shape in the YZ plane.

In this way, it is possible to provide the fine tactile sensations by using the top panel 120D of the curved glass. In particular, it is effective for a case where a surface of a target tangible object is curved.

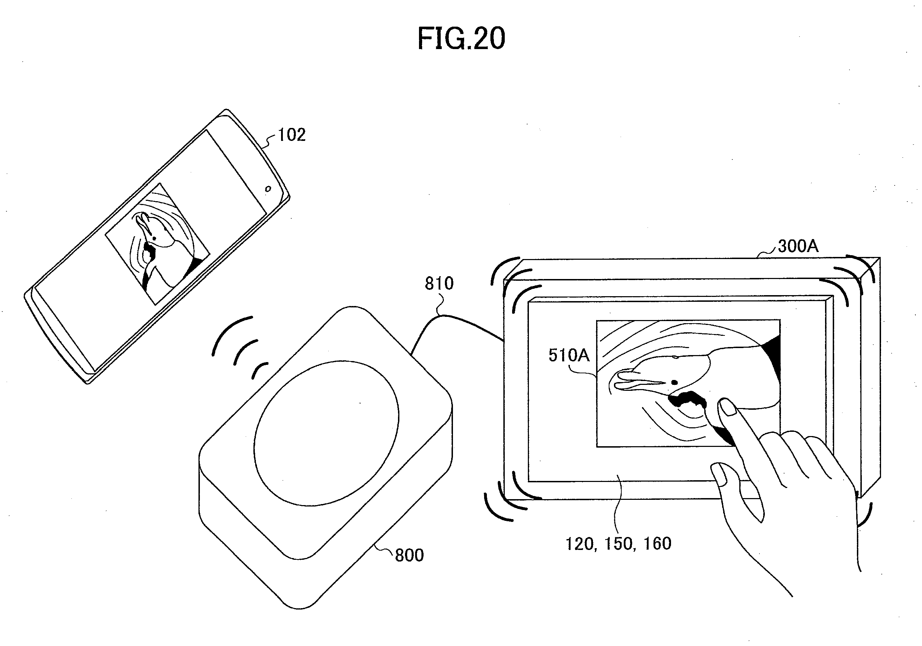

FIG. 20 is a diagram illustrating a state in which a tactile sensation providing apparatus 300A is connected to the smartphone terminal 102 via a short distance wireless communication apparatus 800.

The tactile sensation providing apparatus 300A is an apparatus in which configuration elements for realizing the communication function illustrated in FIG. 6 are omitted from the smartphone terminal 100. An internal configuration of the tactile sensation providing apparatus 300A is similar to that of the tactile sensation providing apparatus 300.

As illustrated in FIG. 20, the user holds the smartphone terminal 102 near the short distance wireless communication apparatus 800 to transmit desired tactile sensation data to the short distance wireless communication apparatus 800 from the smartphone terminal 102.

The short distance wireless communication apparatus 800 can perform communication with the smartphone terminal 102 in a wireless condition such as Bluetooth (registered trademark), for example. The short distance wireless communication apparatus 800 is connected to the tactile sensation providing apparatus 100 via a data cable 810.

In FIG. 20, the user transmits the tactile sensation data of the image 510A of the dolphin to the tactile sensation providing apparatus 100 via the short distance wireless communication apparatus 800, and the image 510A of the dolphin is displayed on the display panel 160 of the tactile sensation providing apparatus 100. The short distance wireless communication apparatus 800 is an example of an input apparatus.

When the user traces the image 510A in this state, the tactile sensation providing apparatus 100 vibrates to provide the tactile sensations to the user's fingertip as if the user were touching the surface of the dolphin with the fingertip. When the tactile sensation providing apparatus 100 of the embodiment is installed at a location where people gather such as a restaurant or a café, for example, the user can feel the tactile sensations through the tactile sensation providing apparatus 100 as if the user were touching the surface of the dolphin 510.

Further, in such a case, a fee may be charged in accordance with a data communication amount between the smartphone terminal 102 and the short distance wireless communication apparatus 800, the number of times of use of the short distance wireless communication apparatus 800 or the tactile sensation providing apparatus 100, a utilization time of the short distance wireless communication apparatus 800 or the tactile sensation providing apparatus 100, or the like. Without using the short distance wireless communication apparatus 800, the wired communication via a direct cable and data transmission via a transportable recording medium such as a flash memory card can be performed between the tactile sensation providing apparatus 100 and the smartphone terminal 102. For example, a usage fee may be charged in accordance with the number of times of use of the short distance wireless communication apparatus 800, a utilization time of the short distance wireless communication apparatus 800, or the like by connecting the short distance wireless communication apparatus 800 to a charging apparatus 820.

The tactile sensation providing apparatus 300A is used, for example, in a case where the tactile sensation providing apparatus 300A can generate more realistic vibrations than the smartphone terminal 102 or in a case where the smartphone terminal 102 does not have a function of the tactile sensation providing apparatus 300 (see FIG.7).

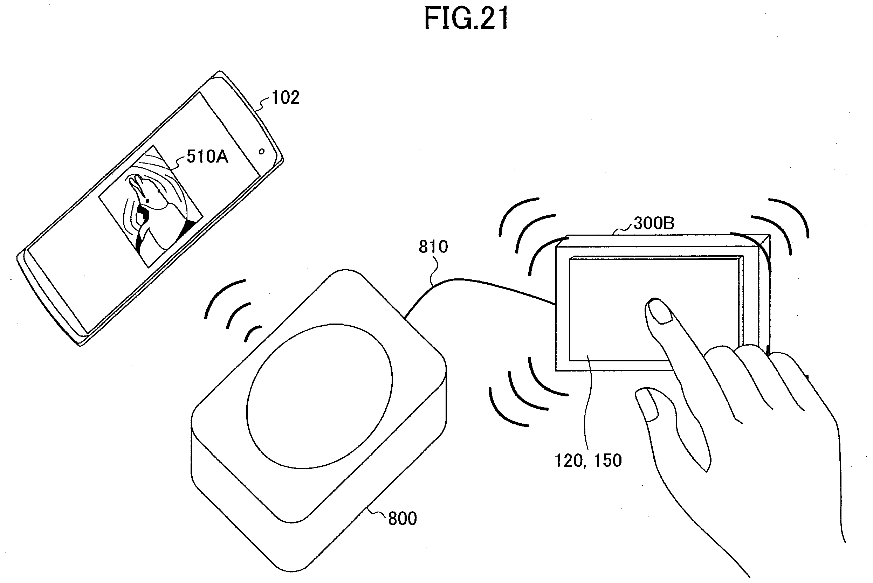

FIG. 21 is a plan view illustrating an operating state of a tactile sensation providing apparatus 300B.

The tactile sensation providing apparatus 300B differs from the tactile sensation providing apparatus 300A illustrated in FIG. 20 in that the tactile sensation providing apparatus 300B does not include the display panel 160. Further, the tactile sensation data (see FIG. 8(A)) does not have to include the image data and the coordinate data because the tactile sensation providing apparatus 300B does not include the display panel 160 and does not drive the vibrating element 140 in accordance with a manipulation position of the touch panel 150.

Because other configurations of the tactile sensation providing apparatus 300B are similar to the configurations of the tactile sensation providing apparatus 300A illustrated in FIG. 20, same reference numerals are given to the similar configuration elements and their descriptions are omitted.

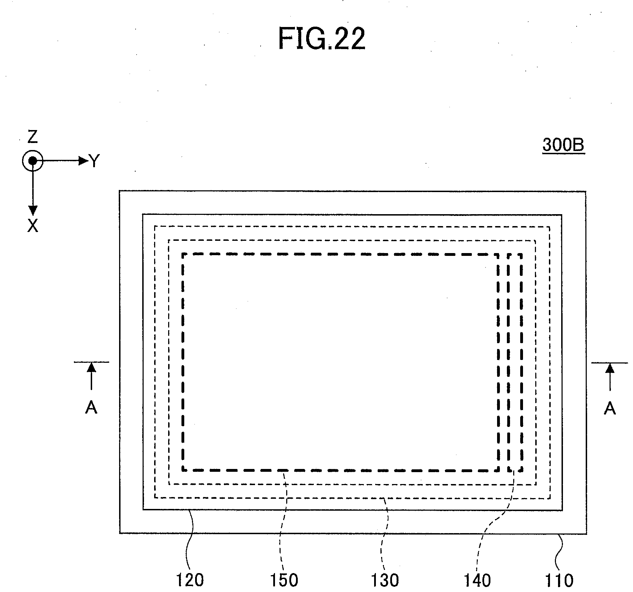

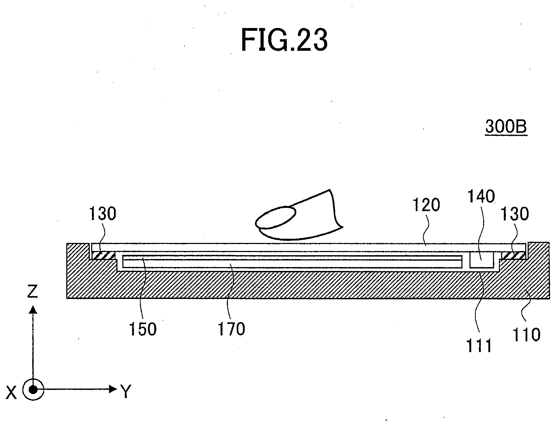

FIG. 22 is a plan view illustrating the tactile sensation providing apparatus 300B. FIG. 23 is a diagram illustrating a cross-sectional view of the tactile sensation providing apparatus 300B taken along a line A-A of FIG. 22. It should be noted that a XYZ coordinate system, which is an orthogonal coordinate system, is defined as illustrated in FIGS. 22 and 23.

The tactile sensation providing apparatus 300B includes the housing 110, the top panel 120, the double-faced adhesive tape 130, the vibrating element 140, the touch panel 150, and the substrate 170. The touch panel 150 is directly mounted on the substrate 170 in the tactile sensation providing apparatus 300B.

When the manipulation input is performed on the top panel 120, the drive controlling part 240 of the tactile sensation providing apparatus 300B drives the vibrating element 140 by using a driving signal having an amplitude based on the tactile sensation data.

In the tactile sensation providing apparatus 300B, the touch panel 150 is provided to detect the manipulation input being performed by the user and a movement of the position of the manipulation input. Accordingly, when the manipulation input is performed on the top panel 120 and it is detected, based on the position data output from the driver IC 151, that the position of the manipulation input moves, the tactile sensation providing apparatus 300B uses the amplitude data of the tactile sensation data to drive the vibrating element 140.

For example, in a case where the tactile sensation data of the dolphin is input to the tactile sensation providing apparatus 300B, the vibrating element 140 is driven by a driving signal that reproduces a feel of a skin of the dolphin. For example, in a case where it is desired to reproduce only the feel of the skin of the dolphin, the tactile sensation providing apparatus 300B, which does not include the display panel 160 and has a simple configuration, can provide fine tactile sensations to the user.

As described above, according to the tactile sensation providing apparatus 300B of a fifth variation example of the embodiment, the kinetic friction force applied to the user's fingertip is varied by generating the natural vibration in the ultrasound frequency band of the top panel 120. Thereby, the tactile sensation providing apparatus 300B can provide the fine tactile sensations to the user. Such a tactile sensation providing apparatus 300B is effective for a case where tactile sensations of a surface of a target tangible object are substantially constant.

When the tactile sensation providing apparatus 300B is installed at a location where people gather such as a restaurant or a cafe, for example, the tactile sensations can be provided to the user through tactile sensation providing apparatus 300B as if the user were touching a surface of a dolphin even if the actual dolphin (see FIG. 1) is not present at the location.

Further, in such a case, a fee may be charged in accordance with a data communication amount between the tactile sensation providing apparatus 300B and the short distance wireless communication apparatus 800, the number of times of use of the short distance wireless communication apparatus 800 or the smartphone terminal 100E, a utilization time of the short distance wireless communication apparatus 800 or the smartphone terminal 100E or the like.

Without using the short distance wireless communication apparatus 800, the wired communication via a direct cable and data transmission via a transportable recording medium such as a flash memory card can be performed between the tactile sensation providing apparatus 300B and the smartphone terminal 102.

Further, the tactile sensation providing apparatus 300B may include a sensor that detects contact on the top panel 120 instead of including the touch panel 150. In this case, the sensor detects that the user touches the top panel 120, and the vibrating element 140 is driven. It should be noted that a pressure sensor or the like may be used as the sensor, for example.

In a case where the display panel 160 is not included as described above, an amplitude in accordance with the position of the manipulation input may be used to drive the vibrating element 140 by displaying a mark on the top panel 120 and by causing the tactile sensation data to include coordinate data on positions of the mark.

Although examples of a tactile sensation data processing apparatus, a portable electronic terminal, a tactile sensation providing system, and a tactile sensation data processing method according to the embodiments of the present invention have been described above, the present invention is not limited to the embodiments specifically disclosed and various variations and modifications may be made without departing from the scope of the present invention.

DESCRIPTION OF THE REFERENCE NUMERALS

100, 100A, 100B, 100C, 100D, 101, and 102 smartphone terminal
110, 110C, and 110D housing
120, 120C, and 120D top panel
130 and 130D double-faced adhesive tape
140 and 140D vibrating element
150 and 150D touch panel
160, 160C, and 160D display panel
170 and 170D substrate
200 controller
220 application processor
230 communication processor
240 drive controlling part
250 memory
300, 300A, and 300B tactile sensation providing apparatus
310 sinusoidal wave generator
320 amplitude modulator
700 server
701 processing part
702 receiving part
703 transmitting part
704 memoery
800 short distance wireless communication apparatus

**Claims**

1. A tactile sensation data processing apparatus for transmitting or receiving data between a first portable electronic terminal and a second portable electronic terminal via a network comprising:

a data receiving part that receives first data relating to a target tangible object from the first portable electronic terminal; and
a data transmitting part that transmits, to the second portable electronic terminal, tactile sensation data that represents tactile sensations of the target tangible object corresponding to the first data when the data receiving part receives the first data from the first portable electronic terminal,
wherein the tactile sensation data is data that associates an image of the target tangible object with positions in the image and amplitudes corresponding to the tactile sensations of the target tangible object at the respective positions, and
wherein the tactile sensation data is data that is used when adjusting an amplitude of a driving signal that drives a vibrating element that generates a natural vibration in an ultrasound frequency band in a manipulation input surface where a manipulation input is performed on a touch panel of the second portable electronic terminal or a touch panel of a tactile sensation providing apparatus connected to the second portable electronic terminal, based on an amplitude associated, inside the tactile sensation data, with a position in the image corresponding to a position of the manipulation input performed on the touch panel.

2. The tactile sensation data processing apparatus according to claim 1,
wherein the first portable electronic terminal includes a tactile sensation data generating part that generates the tactile sensation data relating to the target tangible object, and
wherein the data receiving part receives, as the first data from the first portable electronic terminal, data including the tactile sensation data generated by the tactile sensation data generating part.

3. The tactile sensation data processing apparatus according to claim 1, further comprising:

a tactile sensation data generating part that generates the tactile sensation data based on the first data that the data receiving part receives from the first portable electronic terminal,
wherein the first data includes image data that represents the image of the target tangible object,
wherein the tactile sensation data generating part generates the tactile sensation data based on the image data, and
wherein the data transmitting part transmits, to the second portable electronic terminal, the tactile sensation data generated by the tactile sensation data generating part.

**4.** The tactile sensation data processing apparatus according to claim 3, wherein the data transmitting part further transmits the tactile sensation data to the first portable electronic terminal.

**5.** A tactile sensation providing system comprising:

a first portable electronic terminal;
a second portable electronic terminal; and
a tactile sensation data processing apparatus for transmitting or receiving data between the first portable electronic terminal and the second portable electronic terminal via a network,
wherein the tactile sensation data processing apparatus includes
a data receiving part that receives first data relating to a target tangible object from the first portable electronic terminal, and
a data transmitting part that transmits, to the second portable electronic terminal, tactile sensation data that represents tactile sensations of the target tangible object corresponding to the first data when the data receiving part receives the first data from the first portable electronic terminal,
wherein the tactile sensation data is data that associates an image of the target tangible object with positions in the image and amplitudes corresponding to the tactile sensations of the target tangible object at the respective positions, and
wherein the tactile sensation data is data that is used when adjusting an amplitude of a driving signal that drives a vibrating element that generates a natural vibration in an ultrasound frequency band in a manipulation input surface where a manipulation input is performed on a touch panel of the second portable electronic terminal or a touch panel of a tactile sensation providing apparatus connected to the second portable electronic terminal, based on an amplitude associated, inside the tactile sensation data, with a position in the image corresponding to a position of the manipulation input performed on the touch panel.

**6.** The tactile sensation providing system according to claim 5,
wherein the first portable electronic terminal includes
a tactile sensation data generating part that generates the tactile sensation data relating to the target tangible object, and
wherein the data receiving part of the tactile sensation data processing apparatus receives, as the first data from the first portable electronic terminal, data including the tactile sensation data generated by the tactile sensation data generating part.

**7.** A tactile sensation data processing method performed by a tactile sensation data processing apparatus for transmitting or receiving data between a first portable electronic terminal and a second portable electronic terminal via a network, the method comprising:

receiving first data relating to a target tangible object from the first portable electronic terminal, and
transmitting, to the second portable electronic terminal, tactile sensation data that represents tactile sensations of the target tangible object corresponding to the first data when receiving the first data from the first portable electronic terminal,
wherein the tactile sensation data is data that associates an image of the target tangible object with positions in the image and amplitudes corresponding to the tactile sensations of the target tangible object at the respective positions, and
wherein the tactile sensation data is data that is used when adjusting an amplitude of a driving signal that drives a vibrating element that generates a natural vibration in an ultrasound frequency band in a manipulation input surface where a manipulation input is performed on a touch panel of the second portable electronic terminal or a touch panel of a tactile sensation providing apparatus connected to the second portable electronic terminal, based on an amplitude associated, inside the tactile sensation data, with a position in the image corresponding to a position of the manipulation input performed on the touch panel.

# FIG.1

100

510A

120, 150, 160

# FIG.2

# FIG.3

100

FIG.4

FIG.5

# FIG.6

EP 3 173 904 A1

**300**

**160** DISPLAY PANEL

DRIVER IC

**161**

**200**

**220** APPLICATION PROCESSOR

DRAWING DATA

**150** TOUCH PANEL

DRIVER IC

**151**

POSITION DATA

**230** COMMUNICA-TION PROCESSOR

**250** MEMORY

**240** DRIVE CONTROLLING PART

AMPLITUDE DATA

SINUSOIDAL WAVE SIGNAL IN ULTRASOUND FREQUENCY BAND

**320**

**310** SINUSOIDAL WAVE GENERATOR

**320** AMPLITUDE MODULATOR

DRIVING SIGNAL

**141** AMPLIFIER

**140** VIBRATING ELEMENT

FIG.7

# FIG.8

(A)

| ID | IMAGE DATA | COORDINATE DATA | AMPLITUDE DATA |
|---|---|---|---|
| 001 | I001 | f1=(X,Y) | A1=(X,Y) |
| 002 | I002 | f2=(X,Y) | A2=(X,Y) |
| 003 | I003 | f3=(X,Y) | A3=(X,Y) |
| 004 | I004 | f4=(X,Y) | A4=(X,Y) |
| ⋮ | ⋮ | ⋮ | ⋮ |

(B)

| MOVING SPEED | AMPLIFICATION FACTOR |
|---|---|
| $0 \leqq V < b1$ | 0 |
| $b1 \leqq V < b2$ | G1 |
| $b2 \leqq V < b3$ | G2 |
| | |

# FIG.9

(A)

A  B  C  D

510A

120, 150, 160

(B)

AMPLITUDE

A  B  C  D  POSITION

# FIG.10

```
                    ( START )
                        |
                        |←──────────────────────────┐
                        ↓                            │
                  ◇ MANIPULATION ─── S1              │
                  < INPUT IS PRESENT? >────NO────────┘
                        │
                       YES
        ┌──────────────↓
        │         ◇ WITHIN DISPLAY ─── S2
        │         < AREA OF IMAGE? >────NO──────────────┐
        │               │                               │
        │              YES      ─── S3                  │   ─── S5
        │        ┌──────────────────────┐    ┌──────────────────────┐
        │        │ USE TACTILE SENSATION │    │      TURN OFF         │
        │        │ DATA TO DRIVE VIBRATING│    │ VIBRATING ELEMENT 140 │
        │        │      ELEMENT 140       │    │                       │
        │        └──────────────────────┘    └──────────────────────┘
        │                   │                      │
        │                   ↓←─────────────────────┘
        │            ◇ MANIPULATION ─── S4
        └───YES──────< INPUT IS PRESENT? >
                            │
                           NO
                            ↓
                        ( END )
```

# FIG.11

SERVER 700

PROCESS-ING PART 701

702 RECEIVING PART

TRANSMIT-TING PART 703

MEMORY 704

750

750

101

102

f(X,Y)

f(X,Y)

900

900

SELECT, TRANSMIT

RECEIVE, STORE

USER A

USER B

# FIG.12

(A)

101

510A

160

602 CON-VERT | SELECT AREA 601

603A SLIPPERY | STRONG 604A
603B ROUGH | NORMAL 604B
603C BUMPY | WEAK 604C

605 AUTOMATIC

(B)

101

IMAGE DATA

AMPLITUDE DATA

900

COORDINATE DATA

f(X,Y)

EP 3 173 904 A1

FIG.13

# FIG.14

# FIG.15

EP 3 173 904 A1

# FIG.16

# FIG.17

# FIG.18

# FIG.19

FIG.20

EP 3 173 904 A1

# FIG.21

EP 3 173 904 A1

# FIG.22

# FIG.23

<u>300B</u>

## INTERNATIONAL SEARCH REPORT

| | International application No. |
|---|---|
| | PCT/JP2014/069438 |

**A. CLASSIFICATION OF SUBJECT MATTER**
*G06F3/01*(2006.01)i, *G06F3/0488*(2013.01)i

According to International Patent Classification (IPC) or to both national classification and IPC

**B. FIELDS SEARCHED**

Minimum documentation searched (classification system followed by classification symbols)
G06F3/01, G06F3/0488

Documentation searched other than minimum documentation to the extent that such documents are included in the fields searched
Jitsuyo Shinan Koho          1922–1996   Jitsuyo Shinan Toroku Koho   1996–2014
Kokai Jitsuyo Shinan Koho    1971–2014   Toroku Jitsuyo Shinan Koho   1994–2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2012-181833 A  (Kyocera Corp.),<br>20 September 2012 (20.09.2012),<br>paragraphs [0021] to [0022], [0045], [0047]<br>& US 2012/0206390 A1 | 1–7 |
| Y | JP 2010-238222 A  (Ricoh Co., Ltd.),<br>21 October 2010 (21.10.2010),<br>paragraphs [0077] to [0087]<br>& US 2011/0291976 A1     & WO 2010/104019 A1 | 1–7 |
| Y | WO 2011/027535 A1  (Panasonic Corp.),<br>10 March 2011 (10.03.2011),<br>paragraphs [0056] to [0139]<br>& JP 4769342 B2          & US 2011/0254671 A1<br>& CN 102341766 A | 1–7 |

☒  Further documents are listed in the continuation of Box C.          ☐  See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered    to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 30 September, 2014 (30.09.14) | 07 October, 2014 (07.10.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2014/069438

C (Continuation).    DOCUMENTS CONSIDERED TO BE RELEVANT

| Category* | Citation of document, with indication, where appropriate, of the relevant passages | Relevant to claim No. |
|---|---|---|
| A | US 2011/0316798 A1  (WARREN,J), 29 December 2011 (29.12.2011), paragraphs [0017] to [0024]; fig. 7, 8 & WO 2011/106021 A1     & CN 102844726 A | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2010231609 A